# DEMANDE DE BREVET EUROPEEN

(11) **EP 3 640 800 A1**
(43) Date de publication de la demande: **22.04.2020**
(21) Numéro de dépôt: 19203879.2
(22) Date de dépôt: 17.10.2019
(51) Int. Cl.: G06F 9/50

(54) **PROCÉDÉ D'AMÉLIORATION DE L'EFFICACITÉ D'UTILISATION DES RESSOURCES D'UNE INFRASTRUCTURE DESTINÉE A EXÉCUTER UN PLAN D'ORDONNANCEMENT**

(30) Priorité: 17.10.2018 FR 1859590; 31.12.2018 FR 1874426
(71) Demandeur: BULL SAS, 78340 Les Clayes sous Bois (FR)
(72) Inventeur: DEMEILLIEZ, Bruno, 38380 Saint Laurent du Pont (FR); ALVAREZ MARCOS, Jose Ignacio, 69220 Saint Jean d'Ardières (FR); CHAABANE, Wajih, 73000 Chambery (FR)
(74) Mandataire: A.P.I. Conseil

(57) **Abrégé**

L'invention porte sur procédé de génération d'un plan de dimensionnement optimisé pour l'amélioration de l'efficacité d'utilisation des ressources d'une infrastructure informatique impliquée dans l'exécution d'une pluralité de traitements par lots selon un plan d'ordonnancement, ledit procédé comportant :
- une étape (100) d'acquisition de données, comportant l'acquisition d'un premier plan de dimensionnement d'un coefficient de pondération prédéterminé pour chaque ressource d'une pluralité de ressources et de paramètres d'exécution prédéterminés d'un plan d'ordonnancement;
- une étape de calcul (200) d'une première valeur d'efficacité d'utilisation des ressources;
- une étape de détermination (300) de durées d'exécution rallongées de la pluralité de traitements par lots, en fonction de valeurs de quantités de ressources disponibles,
- une étape de génération (400), d'au moins un plan de dimensionnement optimisé comportant la sélection de nouvelles valeurs de quantité de ressources attribuées à l'au moins un plan de dimensionnement optimisé.

## Description

L'invention concerne le domaine des traitements par lots, et plus particulièrement celui de l'amélioration de l'utilisation des ressources d'une infrastructure informatique impliquée dans l'exécution de traitements par lots et avantageusement celui du dimensionnement d'une infrastructure informatique. L'invention porte notamment sur un procédé d'amélioration de l'efficacité d'utilisation des ressources d'une infrastructure informatique pour l'exécution d'une pluralité de traitement par lots selon un plan d'ordonnancement. Un tel procédé permet de calculer un dimensionnement optimisé de l'infrastructure informatique pour que l'exécution d'un plan d'ordonnancement se fasse avec une efficacité améliorée.

### [Art antérieur]

En général, les traitements par lots sont les processus exécutés par un système informatique de façon autonome (e.g. sans interaction de l'utilisateur). Ils sont utilisés pour l'automatisation de tâches non interactives qui doivent être exécutées de manière fiable avant certaines échéances. Un traitement par lots peut par exemple être utilisé pour mettre à jour les informations à la fin de la journée, transformer des données, générer des rapports, imprimer des documents ou réaliser d'autres tâches non interactives. Un traitement par lot peut aussi être utilisé pour effectuer diverses opérations avec fichiers, notamment des images numériques, telles que le redimensionnement ou la conversion. Ces traitements par lot sont généralement mis en attente ou accumulés pendant les heures de pics lorsque les ressources informatiques ne sont pas disponibles ou limitées par les activités en temps réel. Ils sont alors exécutés en dehors des heures de pointe lorsque les ressources informatiques sont disponibles. Il est ainsi très fréquent que, pour des raisons techniques, ces traitements soient planifiés la nuit, les fins de semaine ou durant des périodes de faible activité métier.

L'évolution constante des systèmes d'information, et la multiplication des traitements par lot, tend à surcharger les périodes durant lesquelles les traitements peuvent s'exécuter. Or, il s'agit souvent de traitements longs et critiques qu'il convient particulièrement de surveiller afin de garantir le bon fonctionnement des applicatifs métiers pendant les horaires « humains » d'utilisation. Ainsi, il est connu des planificateurs de traitement par lots (« batch scheduler » en anglais). Il existe notamment un mécanisme décrit dans le document EP3113022 consistant à utiliser les niveaux de consommation de ressources dans les règles d'ordonnancement des traitements par lot. Plus particulièrement, ce mécanisme se base sur les contraintes d'exécution, les ressources qu'ils consomment et les ressources disponibles sur l'infrastructure. Le document US2018/260242 propose en particulier un procédé et un système de reconfiguration automatique d'un ordonnanceur de tâches informatiques effectuées sur un système de calculs hautes performances. Ce procédé permet la surveillance des tâches en cours d'exécution pour déterminer l'utilisation réelle des ressources allouées pour effectuer de telles tâches, les mesures de performance relatives auxdites tâches et l'achèvement de ces tâches. Néanmoins un tel document de propose pas la détermination d'un plan de dimensionnement permettant l'amélioration de l'efficacité d'utilisation des ressources pour l'exécution d'une pluralité de traitements par lots.

En outre, la fluctuation importante dans le temps des volumes de données entraine des consommations de ressources et des temps de traitements très volatiles. Par exemple, un même ordonnancement sur une même infrastructure peut entrainer un jour une surcharge des ressources et une interruption de traitement alors qu'un autre jour, à quelques jours d'intervalles, aucun dysfonctionnement ne sera décelé. Toutes ces évolutions ont un impact non seulement sur le temps d'exécution des traitements, mais également sur la quantité des ressources utilisées. De fait, les administrateurs des systèmes d'information (SI) ont tendance à augmenter les ressources de leur infrastructure de façon à ce que les traitements par lots soient terminés dans les temps impartis et qu'ils n'entrainent par une saturation des ressources disponibles. En effet, dans certains cas, la production peut être arrêtée si les traitements n'ont pas pu se réaliser en temps voulu.

Ces évolutions entrainent généralement un surdimensionnement des infrastructures informatiques impliquées dans l'exécution de traitements par lots selon des plans d'ordonnancement. Or, avec des utilisations de plus en plus courantes de ces traitements par lots et des contraintes au niveau de l'utilisation des ressources, il est nécessaire pour les administrateurs SI de disposer de procédés ou de dispositifs permettant d'améliorer l'efficacité de l'utilisation des ressources et réduire leur gaspillage.

En effet, une utilisation inadaptée de certaines ressources lors de l'exécution de traitement par lots peut entrainer un ralentissement de l'exécution du traitement par lots, une incompatibilité avec les autres traitements par lots et un épuisement des ressources. De plus, les ressources allouées étant variables entre chaque traitement par lot, il est difficile d'organiser, de programmer ou de façon plus générale d'exécuter les traitements par lots.

Néanmoins, il n'existe pas à ce jour de solution qui permette de calculer un dimensionnement d'une infrastructure informatique permettant la bonne exécution du plan d'ordonnancement, cela sans gaspillage des ressources et avec une efficacité d'utilisation maximale. En effet, avec les mécanismes connus, il peut survenir un gaspillage de ressources. De plus, l'exécution des traitements par lots dans des environnements virtualisés se généralise et la définition d'un dimensionnement optimisé avec une efficacité d'utilisation des ressources améliorée permettant une bonne exécution des traitements par lots permettrait de pouvoir mettre en parallèle un plus grand nombre de traitements par lots sur une même infrastructure informatique.

Ainsi, il existe un besoin pour de nouveaux procédés ou dispositifs capables de générer un plan de dimensionnement permettant l'amélioration de l'efficacité d'utilisation des ressources pour l'exécution d'une pluralité de traitements par lots.

### [Problème technique]

L'invention a pour but de remédier aux inconvénients de l'art antérieur. En particulier, l'invention a pour but de proposer un procédé d'amélioration de l'efficacité d'utilisation des ressources d'une infrastructure informatique pour l'exécution d'une pluralité de traitement par lots selon un plan d'ordonnancement, ledit procédé étant capable de générer un plan de dimensionnement optimisé portant sur une quantité de ressources suffisante pour mener à bien le plan d'ordonnancement, et dont l'efficacité d'utilisation des ressources est améliorée.

L'invention a en outre pour but de proposer un dispositif capable de mettre en œuvre un procédé d'amélioration de l'efficacité d'utilisation des ressources d'une infrastructure informatique de façon à ce qu'elle soit capable avec un minimum de ressource d'exécuter les traitements par lots dans un temps maximum prédéterminé et avec une efficacité maximale des ressources utilisées.

### [Brève description de l'invention]

A cet effet, l'invention porte sur un procédé de génération d'un plan de dimensionnement optimisé pour l'amélioration de l'efficacité d'utilisation des ressources d'une infrastructure informatique impliquée dans l'exécution d'une pluralité de traitements par lots selon un plan d'ordonnancement, ledit procédé comportant :
- une étape d'acquisition de données, par un module d'acquisition, comportant l'acquisition d'un premier plan de dimensionnement, d'un coefficient de pondération prédéterminé pour chaque ressource d'une pluralité de ressources et de paramètres d'exécution prédéterminés d'un plan d'ordonnancement, ledit premier plan de dimensionnement comportant des premières valeurs de quantité de ressources attribuées permettant l'exécution d'une pluralité de traitements par lots selon le plan d'ordonnancement sur une durée correspondant à une première durée globale d'exécution du plan d'ordonnancement ;
- une étape de calcul d'une première valeur d'efficacité d'utilisation des ressources, par un module d'optimisation, à partir des premières valeurs de quantité de ressources attribuées, des coefficients de pondération prédéterminés et de la première durée globale d'exécution du plan d'ordonnancement ;
- une étape de détermination de durées d'exécution rallongées de la pluralité de traitements par lots, en fonction de valeurs de quantités de ressources disponibles, comportant :
   ∘ la génération sur une infrastructure informatique, par un module de raréfaction de ressources, d'une consommation contrôlée d'au moins une ressource selon des règles de raréfaction préalablement mémorisées de façon à laisser à disposition d'un traitement par lots une quantité de ressources disponible inférieure à une quantité de ressources initiale,
   ∘ l'exécution sur l'infrastructure informatique, par un module d'exécution de traitement par lots, de chacun des traitements par lots de la pluralité de traitements par lots, et
   ∘ une étape de mesure, par un module de collecte de métriques, de durées d'exécution rallongées en fonction de valeurs de quantité de ressources disponible pour chacun des traitements par lots ; et
- une étape de génération, par le module d'optimisation, d'au moins un plan de dimensionnement optimisé, ladite étape de génération comportant :
   ∘ la définition de valeurs de quantité de ressources, inférieures aux premières valeurs de quantité de ressources attribuées,
   ∘ le calcul, pour chaque valeur de quantité de ressources, d'une nouvelle valeur d'efficacité d'utilisation des ressources, ledit calcul étant fonction des valeurs de quantité de ressources, des coefficients de pondération prédéterminés et des durées d'exécution rallongées mesurées des traitements par lots, et
   ∘ la sélection de nouvelles valeurs de quantité de ressources attribuées à l'au moins un plan de dimensionnement optimisé, lesdites nouvelles valeurs de quantité de ressources attribuées étant sélectionnées parmi les valeurs de quantité de ressources dont la nouvelle valeur d'efficacité d'utilisation des ressources est améliorée par rapport à la première valeur d'efficacité d'utilisation des ressources

Le procédé selon l'invention permet de calculer un dimensionnement en ressources, pour une infrastructure informatique, capable de supporter la bonne exécution d'un plan d'ordonnancement et permettant de maximiser l'efficacité de l'utilisation des ressources. Il permet par exemple de déterminer le ou les dimensionnements comportant une combinaison de ressources plus efficace pour un plan d'ordonnancement donné. De nombreuses méthodes visent à réduire le temps d'exécution des traitements par lot ou à sécuriser leur exécution en assurant une quantité de ressources bien supérieure au besoin. Ici, le procédé permet de générer un plan de dimensionnement améliorant l'efficacité d'utilisation des ressources impliquées ou attribuées. C'est-à-dire que les valeurs de ressources attribuées ne sont pas sélectionnées pour être les plus basses possible ou pour permettre l'exécution la plus rapide mais elles sont sélectionnées pour correspondre aux quantités de ressources les plus adaptées au regard de facteurs propres à ses ressources (disponibilités, quantité brute, demande...) tels que modélisés par le coefficient de pondération.

**Selon d'autres caractéristiques optionnelles du procédé** :
- la génération d'au moins un plan de dimensionnement optimisé comporte en outre le calcul de paramètres d'exécution du plan d'ordonnancement en fonction de valeurs d'efficacité d'utilisation des ressources et en ce que les nouvelles valeurs de quantité de ressources attribuées sont également sélectionnées parmi les valeurs de quantité de ressources dont les paramètres d'exécution calculés respectent des paramètres d'exécution prédéterminés du plan d'ordonnancement. Ainsi, il est par exemple possible de vérifier que la durée d'exécution globale maximale prédéterminée du plan d'ordonnancement n'est pas dépassé.
- le premier plan de dimensionnement est obtenu selon une étape de génération de plan de dimensionnement comportant :
   ∘ une étape d'acquisition de données, par un module d'acquisition, comportant l'acquisition de règles d'exécution prédéterminées, et d'une empreinte sur une pluralité de ressources de chaque traitement par lots ;
   ∘ une étape de calcul, par un module de dimensionnement, comportant, en fonction de l'empreinte sur une pluralité de ressources de chaque traitement par lots et selon un plan d'ordonnancement respectant les règles d'exécution prédéterminées, le calcul de valeurs maximales de consommation de ressources par période par les traitements par lots, et
   ∘ une étape de définition d'un premier plan de dimensionnement d'une infrastructure informatique, par le module de dimensionnement, en fonction des valeurs maximales de consommation de ressources par périodes calculées, ledit premier plan de dimensionnement comportant des premières valeurs de quantité de ressources attribuées
- il comprend la mesure, par le module de collecte de métriques, d'une empreinte de chacun des traitements par lots et l'identification, par le module d'optimisation, de ressources critiques pour chacun des traitements par lots. Cette mesure peut être réalisée en amont du procédé par exemple préalablement à l'étape de détermination de durées d'exécution rallongées. Elle permet de réaliser une sélection des ressources à étudier dans le cadre de l'optimisation du dimensionnement.
- l'étape de génération comporte en outre :
   ∘ le calcul, pour chaque valeurs de quantité générées de ressources, d'une nouvelle durée globale d'exécution du plan d'ordonnancement en fonction des durées d'exécution rallongées mesurées des traitements par lots, et
   ∘ la suppression des valeurs de quantité de ressources, pour lesquelles la nouvelle durée globale d'exécution du plan d'ordonnancement correspondant est supérieure à une durée globale maximale prédéterminée d'exécution du plan d'ordonnancement

Cela permet au procédé selon l'invention de généré des plans de dimensionnement présentant une efficacité d'utilisation des ressources améliorée mais respectant également des durées d'exécution maximales prédéterminées.
- lors de l'étape de génération, le procédé comporte la génération d'une pluralité de plan de dimensionnements optimisés.
- Il comporte en outre une étape de sélection d'un plan de dimensionnement optimisé.
- Il comprend en outre une étape de vérification du respect du plan d'ordonnancement, ladite étape comprenant :
   ∘ l'exécution, par le module d'exécution de traitement par lots et sur une infrastructure informatique dont les ressources disponibles correspondent au plan de dimensionnement optimisé, de la pluralité de traitements par lots selon le plan d'ordonnancement,
   ∘ la mesure, par le module de collecte de métriques, de paramètres d'exécution du plan d'ordonnancement, et
   o la comparaison, par un module de vérification, des paramètres mesurés d'exécution du plan d'ordonnancement avec des paramètres prédéterminés d'exécution du plan d'ordonnancement.
      Ainsi, il est possible de vérifier que le plan de dimensionnement optimisé généré permet effectivement l'exécution du plan d'ordonnancement dans les conditions prescrites. La comparaison peut de préférence être réalisée sur la durée d'exécution globale du plan d'ordonnancement.
- l'étape de vérification du respect du plan d'ordonnancement comprend au préalable la génération sur l'infrastructure informatique, par le module de raréfaction de ressources, d'une consommation contrôlée de plusieurs ressources selon le plan de dimensionnement optimisé. Cela permet de pouvoir vérifier avant la mise en production sur une infrastructure dédiée que le plan de dimensionnement est adapté au plan d'ordonnancement et à ses règles d'exécution.
- l'étape de vérification comprend en outre :
   ∘ le calcul, par le module de vérification, d'une différence entre une durée globale maximale prédéterminée d'exécution du plan d'ordonnancement et une durée globale mesurée d'exécution du plan d'ordonnancement,
   ∘ la comparaison de la différence calculée, par le module de vérification, à un seuil prédéterminé de performance, et
   ∘ la validation, par le module de vérification, du plan de dimensionnement optimisé lorsque le seuil prédéterminé de performance n'est pas dépassé.
      Ainsi, il est possible de vérifier s'il est possible d'optimiser encore le plan de dimensionnement lorsque celui-ci permet encore malgré la réduction de ressources, l'exécution du plan d'ordonnancement dans une durée bien inférieure la durée globale maximale prédéterminée. Ces étapes permettent de réduire encore le gaspillage de ressources.
- il comprend en outre une étape de modification du plan de dimensionnement optimisé si au moins un des paramètres prédéterminés d'exécution du plan d'ordonnancement suivants n'est pas respecté : règle d'exécution, durée maximale prédéterminée d'exécution d'un traitement par lots et durée globale maximale prédéterminée du plan d'ordonnancement.
- Il comprend en outre une étape de calcul par un module de conception de plan d'ordonnancement, d'un plan d'ordonnancement respectant des règles d'exécution.
- Il comprend en outre une étape de réduction supplémentaire de la quantité de ressources attribuée.
- Il comprend en outre une étape d'augmentation supplémentaire de la quantité de ressources attribuée.

Selon un autre aspect, l'invention porte sur un dispositif de génération d'un plan de dimensionnement optimisé pour l'amélioration de l'efficacité d'utilisation des ressources d'une infrastructure informatique impliquée dans l'exécution d'une pluralité de traitements par lots selon un plan d'ordonnancement selon l'invention, caractérisé en ce qu'il comporte :
- un module d'acquisition configuré pour acquérir un premier plan de dimensionnement, un coefficient de pondération prédéterminé pour chaque ressource d'une pluralité de ressource et des paramètres d'exécution prédéterminés d'un plan d'ordonnancement, ledit premier plan de dimensionnement comportant des premières valeurs de quantité de ressources attribuées permettant l'exécution d'une pluralité de traitements par lots selon un plan d'ordonnancement, ladite exécution se déroulant sur une durée correspondant à une première durée globale d'exécution du plan d'ordonnancement ;
- un module de raréfaction de ressources configuré pour générer, sur une infrastructure informatique, une consommation contrôlée d'au moins une ressource selon des règles de raréfaction préalablement mémorisées de façon à laisser à disposition d'un traitement par lots une quantité de ressources disponible inférieure à une quantité de ressources initiale,
- un module d'exécution de traitement par lots configuré pour exécuter, sur l'infrastructure informatique, chacun des traitements par lots de la pluralité de traitements par lots, et
- un module de collecte de métriques configuré pour mesurer des durées d'exécution rallongées en fonction de valeurs de quantité de ressources disponibles pour chacun des traitements par lots,
- un module d'optimisation configuré pour calculer une première valeur d'efficacité d'utilisation des ressources à partir des premières valeurs de quantité de ressources attribuées, des coefficients de pondération prédéterminés et de la première durée globale d'exécution du plan d'ordonnancement, et configuré pour définir des valeurs de quantité de ressources inférieures aux premières valeurs de quantité de ressources attribuées ; calculer, pour chaque valeur de quantité de ressource une nouvelle valeur d'efficacité d'utilisation des ressources, ledit calcul étant fonction des valeurs de quantité de ressources, des coefficients de pondération prédéterminés et des durées d'exécution rallongées mesurées des traitements par lots, et sélectionner de nouvelles valeurs de quantité de ressources attribuées à l'au moins un plan de dimensionnement optimisé, lesdites nouvelles valeurs de quantité de ressources attribuées étant sélectionnées parmi les valeurs de quantité de ressources dont la nouvelle valeur d'efficacité d'utilisation des ressources est améliorée par rapport à la première valeur d'efficacité d'utilisation des ressources .

Comme le procédé selon l'invention, un tel dispositif permet de calculer le dimensionnement d'une l'infrastructure informatique, nécessaire à la bonne exécution d'un plan d'ordonnancement tout en maximisant l'efficacité de l'utilisation des ressources. Ainsi contrairement aux dispositifs ou systèmes classiques visant à optimiser le plan d'ordonnancement ou à assurer l'absence de dysfonctionnement lors de l'exécution d'un plan d'ordonnancement, un tel dispositif va permettre de réduire le gaspillage de ressources associées au maintien d'infrastructure informatique surdimensionnées et dédiées à l'exécution des traitements par lots.

Selon un autre aspect, l'invention porte en outre sur un programme d'ordinateur comprenant des instructions qui, lorsque le programme d'ordinateur est chargé dans la mémoire d'un ordinateur et est exécuté par un processeur dudit ordinateur, cause la mise en œuvre par l'ordinateur de toutes les étapes du procédé selon l'invention.

Selon un autre aspect, l'invention porte en outre sur un support d'enregistrement tangible, lisible par un ordinateur, sur lequel est enregistré de manière non-transitoire le programme selon l'invention.

D'autres avantages et caractéristiques de l'invention apparaitront à la lecture de la description suivante donnée à titre d'exemple illustratif et non limitatif, en référence aux Figures annexées qui représentent :
- Figure 1, une représentation schématique d'un procédé de génération d'un plan de dimensionnement optimisé pour l'amélioration de l'efficacité d'utilisation des ressources d'une infrastructure informatique impliquée dans l'exécution d'une pluralité de traitements par lots selon l'invention. Les étapes encadrées par des pointillés sont facultatives ;
- Figure 2, une représentation schématique d'une étape préalable d'identification de ressources critiques ;
- Figure 3, une représentation schématique d'une étape préalable de génération d'un plan de dimensionnement ;
- Figure 4, une représentation schématique d'une étape de détermination de durées d'exécution rallongées, de la pluralité des traitements par lots, en fonction de valeurs de quantité de ressources disponibles selon un mode de réalisation de l'invention ;
- Figure 5A, une représentation schématique d'une étape de génération d'au moins un nouveau plan de dimensionnement optimisé selon un mode de réalisation de l'invention
- Figure 5B, une représentation schématique d'une étape de génération d'au moins un nouveau plan de dimensionnement optimisé selon un mode de réalisation de l'invention ;
- Figure 5C, une représentation schématique d'une étape de calcul d'un plan d'ordonnancement selon un mode de réalisation de l'invention
- Figure 6, une représentation schématique d'une étape de vérification du respect du plan d'ordonnancement selon l'invention ;
- Figure 7, une représentation schématique d'une étape de vérification du respect du plan d'ordonnancement selon un mode de réalisation de l'invention ;
- Figure 8, une représentation schématique d'une étape de modification supplémentaire de la quantité de ressources attribuées au plan de dimensionnement optimisé selon l'invention ;
- Figures 9A et 9B, représentent schématiquement les étapes de réduction (9A) ou d'augmentation (9B) des valeurs de ressources attribuées au plan de dimensionnement selon un mode de réalisation de l'invention.
- Figures 10 et 11, représentent une vue schématique du dispositif d'optimisation du dimensionnement d'une infrastructure informatique pour l'exécution d'une pluralité de traitement par lots selon des modes de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

### [Description de l'inventionl

Dans la suite de la description, l'expression « **améliorée l'efficacité d'utilisation des ressources** » au sens de l'invention, on entend l'action de maximiser ou perfectionner l'utilisation des ressources d'une infrastructure informatique, dans le cadre de l'exécution d'un traitement par lot, par rapport à un niveau antérieur à la mise en œuvre de l'invention. Cette meilleure efficacité est permise par le choix de quantité de ressources de façon à privilégier les ressources les plus disponibles et dont l'utilisation entraine un impact le plus faible possible sur l'infrastructure informatique ou son administration.

L'expression « **traitements par lots »** (« batch processing » en terminologie anglo-saxonne) correspond à un enchaînement automatique de plusieurs phases par l'intermédiaire d'une suite de commandes (processus) sur un ordinateur sans intervention d'un opérateur. Une fois qu'un processus est terminé l'ordinateur traite un lot suivant et à un instant T, il y a généralement plusieurs traitements par lots qui s'exécutent en parallèle. Le traitement des lots se termine une fois que tous les lots de la pile (queue) ont été exécutés. Les traitements par lots sont surtout utilisés pour des tâches automatisées, par exemple pour l'envoi automatique de courriers postaux ou électroniques. Un traitement par lot est généralement stocké dans un fichier de commandes qui est exécuté par le système informatique. L'exécution du fichier de commandes peut produire un certain nombre d'actions aussi diverses que la mise à jour de bases de données, l'envoi d'e-mails aux utilisateurs ou la production d'un ou de plusieurs fichiers de sortie à utiliser par un autre traitement par lots.

Le « **plan d'ordonnancement** » au sens de l'invention, aussi appelé « plan d'exécution », correspond à l'ordre d'exécution des différents traitements par lots devant être réalisé au cours d'une période de temps donnée. Cet ordonnancement est généralement calculé en fonction de règles et/ou de prérequis de façon à satisfaire des exigences de disponibilité de ressources.

L'expression « **paramètres d'exécution du plan d'ordonnancement** » au sens de l'invention correspond à un ensemble de paramètres associés à l'exécution du plan d'ordonnancement. Cela peut par exemple inclure la durée globale d'exécution du plan d'ordonnancement, le respect des règles d'exécution ou la durée d'exécution des traitements par lots. Les paramètres d'exécution du plan d'ordonnancement peuvent également inclure : l'utilisation de ressources par les traitements par lots dans le temps, ou encore un volume de données générées ou une occupation de l'espace mémoire après la fin des traitements par lots. Ces valeurs peuvent par exemple être mesurées par des sondes et elles peuvent également être prédéterminées, l'invention incluant en particulier la comparaison de valeurs de paramètres mesurés à des valeurs de paramètres prédéterminées.

Les expressions « **règles d'exécution** » ou « **règles d'exécution prédéterminées** » au sens de l'invention correspondent à des règles d'exécution d'un plan d'ordonnancement dont le respect permet une exécution répondant aux besoins de l'administrateur SI. Ces règles peuvent notamment inclure des ordres d'enchainement à respecter pour les traitements par lots, des horaires à respecter, ou des seuils de consommation en ressources à respecter.

L'expression « **durée d'exécution** » au sens de l'invention correspond au temps d'exécution d'un traitement par lots ou de plusieurs traitements par lots. Autrement dit, c'est la durée nécessaire au système informatique (e.g. processeur) pour exécuter les ordres. L'expression « durée d'exécution maximale prédéterminée » au sens de l'invention correspond à la durée d'exécution qu'un traitement par lots ne doit pas dépasser. Elle peut correspondre par exemple à la durée d'exécution d'un traitement par lots à ne pas dépasser de façon à ne pas entrainer un dysfonctionnement ou une finalisation tardive d'un plan d'ordonnancement.

L'expression « **durée d'exécution rallongée** » au sens de l'invention correspond à la durée d'exécution d'un traitement par lots ou de plusieurs traitements par lots lorsque les ressources disponibles ont été réduites.

L'expression « **durée globale d'exécution du plan d'ordonnancement** » au sens de l'invention correspond au temps d'exécution du plan d'ordonnancement. Autrement dit, c'est la durée nécessaire au système informatique (e.g. processeur) pour exécuter les ordres associés à tous les traitements par lots constituant le plan d'ordonnancement. La durée globale d'exécution maximale prédéterminée du plan d'ordonnancement au sens de l'invention correspond à la durée d'exécution qu'un plan d'ordonnancement ne doit pas dépasser. Elle peut correspondre par exemple à la durée à ne pas dépasser de façon à ne pas entrainer un dysfonctionnement ou une finalisation tardive d'un plan d'ordonnancement.

L'expression « **infrastructure informatique** » au sens de l'invention correspond à un ensemble de structures informatiques (i.e. dispositifs informatiques) apte à faire fonctionner une application ou une chaine applicative. La structure informatique peut être un ou plusieurs serveurs, elle peut par exemple être composée d'un serveur de présentation, d'un serveur métier et d'un serveur de données. L'infrastructure informatique peut également être un serveur « test » avec les mêmes ressources qu'un serveur de production ou bien un clone d'un serveur virtuel de production. De façon préférée, une structure informatique est un serveur.

L'expression « **plan de dimensionnement** » au sens de l'invention correspond aux quantités de ressources accordées à, ou détenues par, une infrastructure informatique notamment dans le cadre de l'exécution d'un plan d'ordonnancement.

Par « **sonde** » ou « **sonde informatique** », on entend au sens de l'invention un logiciel associé à un équipement qui permet d'effectuer, de gérer et de faire remonter vers un équipement informatique des mesures des valeurs de paramètres de l'utilisation de ressources, de paramètres d'exécution de traitement par lots ou encore de l'état de fonctionnement des ressources.

Le terme « **ressource** » au sens de l'invention correspond à des paramètres, des capacités ou des fonctions de dispositifs informatiques permettant le fonctionnement d'un traitement par lot ou d'une application. Un même dispositif informatique est associé généralement à plusieurs ressources. De même, une même ressource peut être partagée entre plusieurs traitements par lot. Une ressource est généralement associée à un identifiant unique permettant de l'identifier au sein d'une infrastructure informatique. Par exemple, le terme « ressource » peut inclure : des disques réseaux caractérisés par exemple par leurs entrées/sorties, la lecture/écriture sur des disques, le taux d'utilisation de la mémoire, un réseau caractérisé par sa bande passante, un processeur caractérisé par exemple par son utilisation (en pourcent) ou le taux d'occupation de ses caches, une mémoire vive caractérisée par la quantité allouée. On entend par « utilisation des ressources », la consommation d'une ressource par un traitement par lot ou par une application métier. L'expression « ressource critique » au sens de l'invention correspond à la ou aux ressources dont l'utilisation dans des conditions nominales (i.e. usuelles) est la plus proche de son utilisation limite (seuil prédéterminé d'utilisation maximum) ou de sa saturation ou encore une ressource identifiée comme telle par un utilisateur. Ainsi, la raréfaction d'une ressource critique fait que les conditions d'exécution de la brique applicative ne sont pas respectées (e.g. seuil de consommation des ressources non respectés ou temps de traitements non respectés). Par exemple, dans une infrastructure informatique comportant un CPU et 8Gb de RAM où en conditions usuelles il y a consommation de 80% de CPU et 2 Gb de RAM alors la ressource critique sera la ressource CPU. Le terme « empreinte » au sens de l'invention correspond à des données sur la consommation en ressources d'un traitement par lot ou la disponibilité en ressources d'une machine (pour l'empreinte à vide) pendant sa période d'exécution. Le « **pas d'une ressource** » peut être d'une part la quantité minimale de ressource pouvant être ajoutée ou soustraite lors d'une étape de modification et d'autre part un multiple de la modification pouvant subir le niveau de ladite ressource. Certaines ressources présentent une granulométrie élevée (e.g. serveurs) alors que d'autre présentent une granulométrie faible (e.g. mémoire vive disponible).

L'expression « **quantité de ressources initiale** » au sens de l'invention correspond aux valeurs de quantité de ressources d'une infrastructure informatique avant la mise en place d'une consommation contrôlée des ressources.

L'expression « **quantité de ressources disponibles** » au sens de l'invention correspond aux valeurs de quantité de ressources qui seront accessibles aux traitements par lots après la mise en place d'une consommation contrôlée.

L'expression « **quantité de ressources attribuées** » au sens de l'invention correspond aux valeurs de quantité de ressources calculées, selon le procédé de l'invention, comme étant suffisantes à l'infrastructure informatique pour mettre en œuvre un plan d'ordonnancement s'exécutant sur une durée inférieure à une durée globale maximale prédéterminée.

L'expression « **consommation contrôlée d'au moins une ressource** » au sens de l'invention correspond à une réduction de la quantité de ressource pouvant être utilisée par un traitement par lots s'exécutant sur une infrastructure informatique par exemple via l'exécution de codes sur ladite infrastructure informatique faisant appels aux ressources concernées.

On entend par « **traiter** », « **calculer** », « **déterminer** », « **afficher** », « **extraire** » **« comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », **« code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments.

Comme cela a été mentionné, la plupart des systèmes et procédés de l'art antérieur s'intéressent à l'optimisation de l'ordonnancement des traitements par lots ou bien à l'organisation du dimensionnement des infrastructures supportant ces traitements par lots de façon à assurer un niveau de service élevé.

Au contraire, dans le cadre de la présente invention, les inventeurs ont développé un procédé et un dispositif permettant de mettre la priorité sur une utilisation des ressources avec une efficacité maximale. Ainsi, les traitements par lots peuvent être exécutés dans un temps imparti en mobilisant une quantité de ressources donnée de façon à avoir un impact le plus faible possible sur les autres processus à exécuter sur l'infrastructure informatique. Par exemple, l'exécution du traitement par lots se fera en priorité sur des ressources non essentielles à d'autres applications ou largement disponibles au sein de l'infrastructure informatique.

Pour cela, les inventeurs proposent en particulier un procédé et un dispositif capables de calculer le dimensionnement de l'infrastructure informatique nécessaire à l'exécution efficace d'un plan d'ordonnancement. L'objectif est en particulier de déterminer le ou les dimensionnements permettant de maximiser l'efficacité d'utilisation des ressources et également de s'assurer que l'exécution du plan d'ordonnancement respecte une durée maximale prédéterminée d'exécution de chaque traitement ou plus largement une durée globale maximale prédéterminée d'exécution du plan d'ordonnancement, ainsi que de préférence des règles d'exécution dudit plan d'ordonnancement.

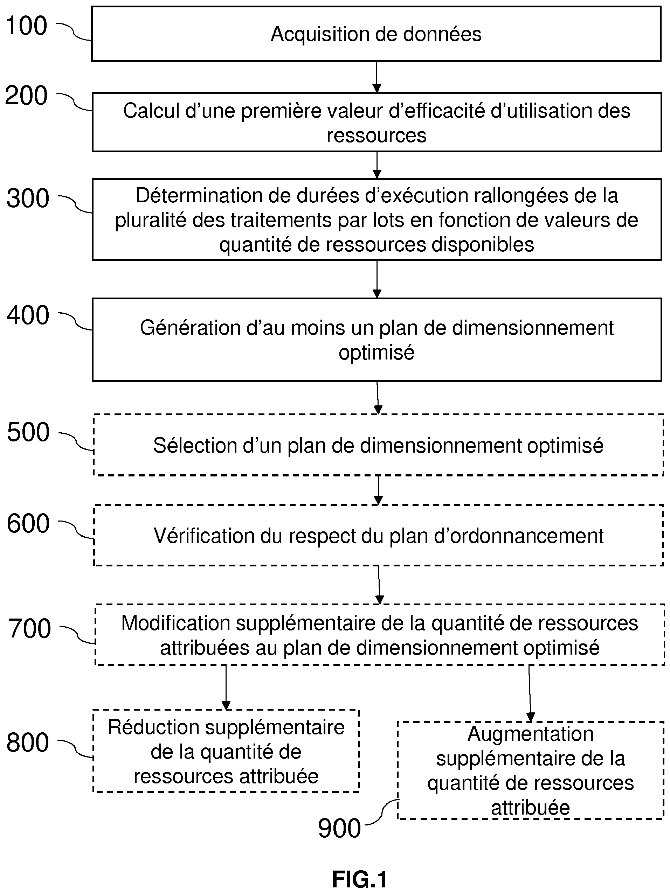

Comme cela est illustré à la **figure 1****, selon un premier aspect,** l'invention porte sur un **procédé de génération d'un plan de dimensionnement optimisé pour l'amélioration de l'efficacité d'utilisation des ressources d'une infrastructure informatique impliquée dans l'exécution d'une pluralité de traitements par lots selon un plan d'ordonnancement,** ledit procédé comportant une étape 100 d'acquisition de données comportant l'acquisition d'un premier plan de dimensionnement, une étape de calcul 200 d'une première valeur d'efficacité d'utilisation des ressources, une étape de détermination 300 de durées d'exécution rallongées de la pluralité de traitements par lots en fonction de valeurs de quantités de ressources disponible, et une étape 400 de génération d'au moins un plan de dimensionnement optimisé.

En particulier, le procédé selon l'invention comporte une **étape 100 d'acquisition de données** pouvant être mise œuvre par un module d'acquisition 10. Cette étape peut comporter notamment l'acquisition d'un premier plan de dimensionnement comportant des premières valeurs de quantité de ressources attribuées permettant l'exécution d'une pluralité de traitements par lots. Ce premier plan de dimensionnement et ces premières valeurs de quantité de ressources attribuées peuvent correspondre à des valeurs de quantité de ressources maximales qu'il conviendra de réduire dans le cadre du procédé selon l'invention. Classiquement, l'exécution de la pluralité de traitements par lots est menée selon un plan d'ordonnancement et se déroule sur une durée correspondant à une première durée globale d'exécution du plan d'ordonnancement. Comme cela sera détaillé par la suite et contrairement à beaucoup d'innovations dans ce domaine, l'objet de l'invention n'est pas de réduire cette première durée globale d'exécution du plan d'ordonnancement mais au contraire de déterminer un dimensionnement d'une infrastructure informatique présentant des quantités de ressources ayant le moins d'impact sur le fonctionnement des autres applications ou plus largement sur la gestion de l'infrastructure informatique.

En outre, de façon à permettre le choix des ressources les moins impactantes, cette étape 100 d'acquisition de données comporte notamment l'acquisition d'un coefficient de pondération prédéterminé pour chaque ressource d'une pluralité de ressource, de préférence d'une pluralité de ressource critiques, et de paramètres d'exécution prédéterminés d'un plan d'ordonnancement. Le coefficient de pondération prédéterminé pour chaque ressource peut être fonction de facteurs capables de modéliser les caractéristiques des ressources. Par exemple, un facteur d'activité de ressource peut être pris en compte dans le coefficient de pondération prédéterminé et correspondre à la situation actuelle de la ressource et à sa tendance d'évolution. Ce facteur d'activité peut également concerner la gouvernance de la ressource et être représentatif de l'influence de la ressource sur la réalisation des traitements par lots et de la temporalité de cette ressource. Le coefficient de pondération prédéterminé peut également prendre en compte un facteur propre à la gestion de la ressource, la règlementation de sa structuration comprenant par exemple, l'influence de la ressource au sein de la structure informatique, son organisation et son d'hébergement au sein de la structure informatique. Un facteur de sécurité de la ressource prenant en compte la sécurité de chaque ressource et son risque de dysfonctionnement ou d'anomalie ainsi que son niveau de fiabilité peut également être modélisé par le coefficient de pondération prédéterminé. Enfin, le coefficient de pondération prédéterminé peut également être fonction d'un facteur de performance de la ressource prenant en compte son niveau d'utilisation et/ou son stockage, ainsi que de son rendement.

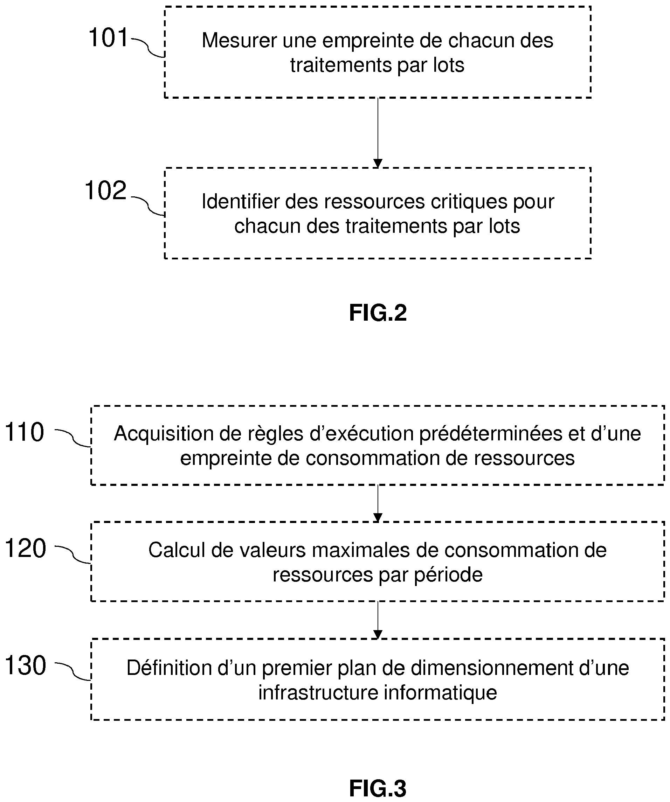

Comme illustré à la **figure 2****,** le procédé selon l'invention peut comporter au préalable une mesure 101, par un module de collecte de métriques 40, d'une empreinte de chacun des traitements par lots et l'identification 102, par un module de gestion des ressources, des ressources critiques pour chacun des traitements par lots. En effet, le procédé selon l'invention vise à optimiser le dimensionnement d'une infrastructure informatique et plus particulièrement à réduire au minimum la quantité de ressources utilisée dans le cadre d'un plan d'ordonnancement et à améliorer l'efficacité d'utilisation des ressources d'un plan de dimensionnement. Il peut être avantageux de s'intéresser, dans le cadre de cette optimisation de dimensionnement, à seulement une partie des ressources dites ressources critiques. Ainsi, les valeurs de quantités de ressources étudiées dans le cadre du procédé selon l'invention peuvent représenter seulement une partie des ressources d'une infrastructure informatique et sont de préférence les ressources critiques. Ainsi, de préférence, le premier plan d'ordonnancement peut consister en une liste des valeurs de quantité de ressources, par exemple critiques, à ne pas dépasser.

Le procédé selon l'invention peut comporter également une étape de génération d'un plan de dimensionnement. En effet, alors que le procédé peut de préférence être appliqué à partir d'un plan de dimensionnement déjà connu ou bien estimé, il est possible que le plan de dimensionnement permettant l'exécution du plan d'ordonnancement ne soit pas connu. L'étape de génération d'un plan de dimensionnement selon un mode de réalisation de l'invention est illustrée à la **figure 3****.** Elle peut notamment comporter une étape 110 d'acquisition de données, pouvant être mise en œuvre par le module d'acquisition 10, comportant l'acquisition de règles d'exécution prédéterminées, et l'acquisition d'une empreinte de consommation de ressources sur une pluralité de ressources de chaque traitement par lots.

L'étape de génération d'un plan de dimensionnement comporte également une étape 120 de calcul comportant, en fonction de l'empreinte de chaque traitement par lots et selon un plan d'ordonnancement respectant les règles d'exécution prédéterminées, le calcul de valeurs maximales de consommation de ressources par période par les traitements par lots. Cette étape de calcul 120 peut par exemple être mise en œuvre par un module de dimensionnement 70.

L'étape de génération d'un plan de dimensionnement peut comporter aussi une étape de définition 130 d'un premier plan de dimensionnement d'une infrastructure informatique 2 en fonction des valeurs maximales de consommation de ressources par périodes calculées, ledit premier plan de dimensionnement comportant des premières valeurs de quantité de ressources attribuées. Cette étape de définition 130 d'un premier plan de dimensionnement peut aussi être mise en œuvre par un module de dimensionnement 70.

Le procédé de génération d'un plan de dimensionnement pour l'amélioration de l'efficacité d'utilisation des ressources d'un plan de dimensionnement d'une infrastructure informatique comporte également **une étape de calcul 200 d'une première valeur d'efficacité d'utilisation des ressources, par un module d'optimisation 50, à partir des premières valeurs de quantité de ressources attribuées, des coefficients de pondération prédéterminés et de la première durée globale d'exécution du plan d'ordonnancement.** Cette étape de calcul peut être réalisée pour chaque ressource. En outre, cette étape permet d'obtenir une valeur d'efficacité d'utilisation des ressources en fonction de la quantité de ressource attribuée et des coefficients de pondération prédéterminés en prenant en compte la durée globale d'exécution du plan d'ordonnancement. Ainsi, la première valeur d'efficacité d'utilisation des ressources permet de déterminer un premier dimensionnement pour l'exécution des traitements par lots selon une durée correspondant à une première durée globale d'exécution du plan d'ordonnancement. En outre, certaines ressources sont plus disponibles que d'autres au niveau des infrastructures informatiques de par leur utilité, accessibilité, etc. et sont donc soumises à différentes contraintes. Il est donc nécessaire pour la bonne exécution des traitements par lots et pour leur optimisation d'exécution, que l'utilisation des ressources se fasse avec une efficacité maximale. La première valeur d'efficacité permet d'obtenir une valeur d'efficacité pour l'ensemble des ressources utilisées pour l'exécution des traitements par lots selon un plan d'ordonnancement. Cela constitue une valeur de départ qu'il convient d'améliorer grâce au procédé selon l'invention.

Le procédé d'optimisation selon l'invention comporte également une **étape de détermination 300 de durées d'exécution rallongées de la pluralité de traitements par lots en fonction de valeurs de quantités de ressources disponibles.**

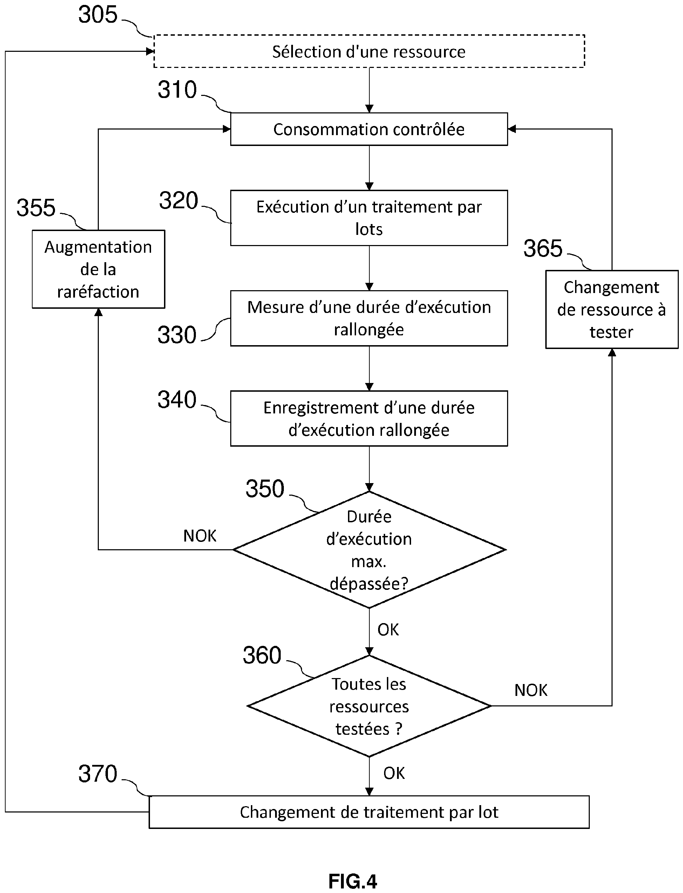

Un mode de réalisation de cette étape de détermination 300 est illustré à la **figure 4****.** Cette étape 300 peut être initiée par la sélection d'un traitement par lots puis, comme illustré, cette étape comporte la sélection 305 d'au moins une ressource, de préférence critique, par laquelle sera initié le processus de calcul des durées d'exécution rallongées. Ensuite, il y a génération 310 sur une infrastructure informatique 2 d'une consommation contrôlée d'au moins une ressource selon des règles de raréfaction préalablement mémorisées de façon à laisser à disposition du traitement par lots sélectionné une quantité de ressources disponible inférieure à une quantité de ressources initiale. Comme cela sera détaillé par la suite, cette consommation contrôlée, ou raréfaction, peut être mise en œuvre par un module de raréfaction de ressources 20. Cette consommation contrôlée tient généralement compte de la granulométrie des ressources et prend donc en considération le pas de chacune des ressources.

De préférence, suite à la mise en place de la raréfaction ou avant la mise en place de la raréfaction (i.e. l'essentiel est que les étapes sont au moins concomitantes), cette étape comporte l'exécution 320 sur l'infrastructure informatique 2 du traitement par lots sélectionné parmi la pluralité de traitements par lots. L'exécution peut être classiquement réalisée par un module d'exécution de traitement par lots 30. Puis, il y a une mesure 330 de durées d'exécution rallongées en fonction de valeurs de quantité de ressources disponibles. La mesure peut notamment être réalisée par un module de collecte de métriques 40 qui sera décrit par la suite. Il peut y avoir autant de mesure de durée d'exécution rallongées qu'il y aura eu de « pas » de raréfaction de ressources. Il peut par exemple y avoir trois mesures comme présenté dans le tableau 1 (la première mesure correspond à l'absence de consommation contrôlée). Etant donné que la quantité de ressource disponible pour le traitement par lots est réduite (i.e. du fait de la raréfaction), la durée d'exécution du traitement par lot est rallongée. En effet, en présence d'une diminution de ressources disponible, les durées des traitements par lots ont tendance à se rallonger. Ces données mesurées peuvent faire l'objet d'un enregistrement dans un ou plusieurs fichiers de sauvegarde tels que des fichiers plats de type tableur, ou base de données permettant d'enregistrer une correspondance entre la durée d'exécution d'un traitement par lots en fonction d'une valeur de ressources disponibles. Le tableau 1 représente un exemple d'enregistrement des durées (en secondes - s) d'exécution des traitements par lots T1, T2, et T3 en fonction des valeurs de ressources R1 (CPU) et R2 (mémoire vive) disponibles à savoir 100 %, 75 %, 50 % et 25 % (pourcentage de la quantité de ressource initiale). En outre, une première valeur d'efficacité d'utilisation des ressources peut être calculée pour chaque ressource indépendamment.

**Tableau 1**

| **Traitement par lots** | **R1 - Quantité** | **R1 - Durée** | **R2 - Quantité** | **R2 - Durée** |
|---|---|---|---|---|
| T1 | 100 % | 9256 s | 100 % | 9256 s |
| T1 | 75 % | 9865 s | 75 % | 12320 s |
| T1 | 50 % | 12327 s | 50 % | 18635 s |
| T1 | 25 % | 16256 s | 25 % | 22845 s |
| T2 | 100 % | 1820 s | 100 % | 1820 s |
| T2 | 75 % | 1981 s | 75 % | 1956 s |
| T2 | 50 % | 2406 s | 50 % | 2142 s |
| T2 | 25 % | 3561 s | 25 % | 2365 s |
| T3 | 100 % | 4120 s | 100 % | 4120 s |
| T3 | 75 % | 6245 s | 75 % | 5641 s |
| T3 | 50 % | 8456 s | 50 % | 6742 s |
| T3 | 25 % | 10578 s | 25 % | 8102 s |

Cette étape de détermination peut également comporter l'enregistrement 340 de l'empreinte de la consommation de ressource du traitement par lots lors de son exécution en présence d'une raréfaction d'une ressource par exemple critique. En effet, l'exécution d'un traitement par lots en présence d'une raréfaction de ressources peut avoir un impact sur d'autres ressources étant donné l'interdépendance de certaines ressources. Par exemple, l'exécution d'un traitement par lots en présence d'une réduction de mémoire vive pourra entrainer une hausse non désirée des accès I/O.

Comme présenté sur la figure 4, une fois les valeurs de durée d'exécution rallongées mesurées et enregistrées, l'étape de détermination 300 peut comporter une comparaison 350 des durées d'exécution rallongées avec une durée d'exécution maximale du traitement par lots. Par exemple, dans le cas présenté en tableau 1, il a été prédéterminé que le traitement T1 doit être réalisé en au maximum 15 000 secondes. Ainsi, sur la figure 4, la réduction à 75 % de la ressource R1 est acceptable (OK) et donc il peut y avoir une augmentation 355 de la consommation contrôlée de ressource jusqu'à atteindre une réduction à 25 % de la ressource R1 qui elle entraine un dépassement de la durée d'exécution maximum (NOK). La consommation contrôlée sur la ressource R1 est alors stoppée et le procédé comporte alors une étape de mémorisation des données générées.

Ensuite, il peut comporter une comparaison 360 des ressources, de préférence critiques, qui ont été testées par rapport aux ressources à tester et un changement 365 de ressource à tester. Toujours selon le tableau 1, lors de la comparaison 350, la ressource R2 entraine dès 75 % un dépassement de la durée d'exécution maximum (NOK) et étant la dernière ressource, de préférence critique, à tester 360 (OK), le procédé peut comporter un changement 370 de traitement par lot à étudier.

Ainsi, au fur et à mesure que les traitements par lots impliqués dans le plan d'ordonnancement sont testés, il est possible de recueillir pour chacun d'eux une durée d'exécution rallongée en fonction des ressources disponibles.

Le procédé selon l'invention comporte également une **étape de génération 400 d'au moins un plan de dimensionnement optimisé.** Comme cela sera décrit par la suite, cette étape de génération 400 peut être mise en œuvre par un module d'optimisation 50.

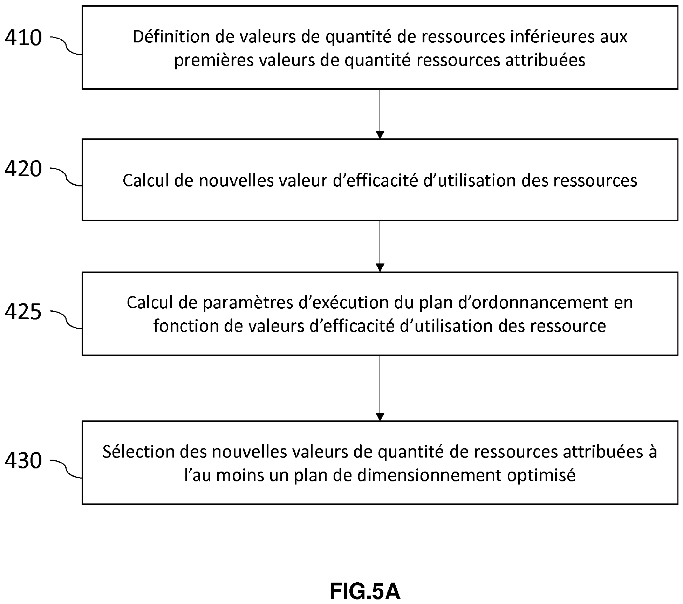

Comme illustré à la figure 5A, l'étape de génération 400 d'au moins un plan de dimensionnement optimisé peut comporter une étape de définition 410 de valeurs de quantité de ressources, inférieures aux premières valeurs de quantité de ressources attribuées. Ainsi, il est possible de générer par exemple aléatoirement, ou de préférence à partir de données sur les durées d'exécution, un ensemble de valeurs de quantité de ressources au sein duquel sera sélectionné les valeurs de quantité de ressource du plan de dimensionnement optimisé.

La définition 410 de valeurs de quantité de ressources inférieures aux premières valeurs de quantité de ressources attribuées peut être suivie d'une étape de calcul 420, pour chaque valeur de quantité de ressources, d'une nouvelle valeur d'efficacité d'utilisation des ressources. En outre, ce calcul est fonction des valeurs de quantité de ressources, des coefficients de pondérations prédéterminés et des durées d'exécution rallongées mesurées des traitements par lots du plan d'ordonnancement. Ainsi, il est possible d'obtenir des nouvelles valeurs d'efficacité d'utilisation des ressources en relation avec les paramètres d'exécution du plan d'ordonnancement et notamment avec des durées d'exécution rallongées mesurées des traitements par lots.

**Tableau 2**

| **Valeurs de quantités de ressource** | **R1 - Quantité** | **R2 - Quantité** | **R3 - Quantité** | **Valeur d'efficacité** | **Durée d'exécution globale** |
|---|---|---|---|---|---|
| V1 | 100 % | 100 % | 100 % | 100 | 16256 s |
| V2 | 75 % | 75 % | 100 % | 150 | 20248 s |
| V3 | 75 % | 50 % | 100 % | 190 | 27748 s |
| V4 | 50 % | 75 % | 90 % | 180 | 24651 s |
| V5 | 50 % | 50 % | 90 % | 210 | 32157 s |

Le tableau 2 présente par exemple un exemple fictif de premières valeurs de quantité de ressources attribuées (V1) et de plusieurs valeurs de quantité de ressources définies lors d'une étape 410 (V2, V3, V4, V5). Pour chacune de ces valeurs, le tableau 1 présente les nouvelles valeurs d'efficacité d'utilisation des ressources par exemple calculées lors de l'étape 420.

L'étape de sélection de nouvelles valeurs de quantité de ressources attribuées peut comporter en outre, un calcul 425 de paramètre d'exécution du plan d'ordonnancement en fonction de nouvelles valeurs d'efficacité d'utilisation des ressources et une comparaison des paramètres d'exécution calculés à des paramètres d'exécution prédéterminés. Ainsi, la génération d'un plan de dimensionnement optimisé peut comporter la sélection de valeurs de quantité de ressources pour lesquelles des valeurs de paramètres d'exécution calculées ou mesurées sont inférieures à des valeurs de paramètres d'exécution prédéterminés. Par exemple dans le tableau 2, la dernière colonne comporte les durées globales d'exécution calculées du plan d'ordonnancement. Il est possible de voir que les valeurs V5 dépasse une limite de 28800 s correspondant à une durée globale maximale prédéterminée d'exécution du plan d'ordonnancement. Ainsi ces valeurs sont écartées dans le cadre du procédé selon l'invention.

L'étape de génération 400 comporte ensuite la sélection 430 de nouvelles valeurs de quantité de ressources attribuées à l'au moins un plan de dimensionnement optimisé. Ces nouvelles valeurs de quantité de ressources attribuées sont sélectionnées parmi les valeurs définies lors de l'étape 410 et correspondent aux valeurs pour lesquelles la nouvelle valeur d'efficacité d'utilisation des ressources est améliorée par rapport à la première valeur d'efficacité d'utilisation des ressources. Alternativement, l'administrateur SI peut sélectionner les valeurs de quantité de ressources adaptées. L'amélioration de la nouvelle valeur d'efficacité d'utilisation des ressources correspond à une valeur maximisée par rapport à la première valeur d'efficacité des ressources. En référence au tableau 2, ce sont les valeurs de quantité de ressources V3 qui présente la valeur d'efficacité maximale. En effet, bien que les valeurs de quantité de ressources V4 soient globalement inférieures, elles ne sont pas celles qui permettront de maximiser l'efficacité d'utilisation des ressources dans le cadre de ce plan d'ordonnancement.

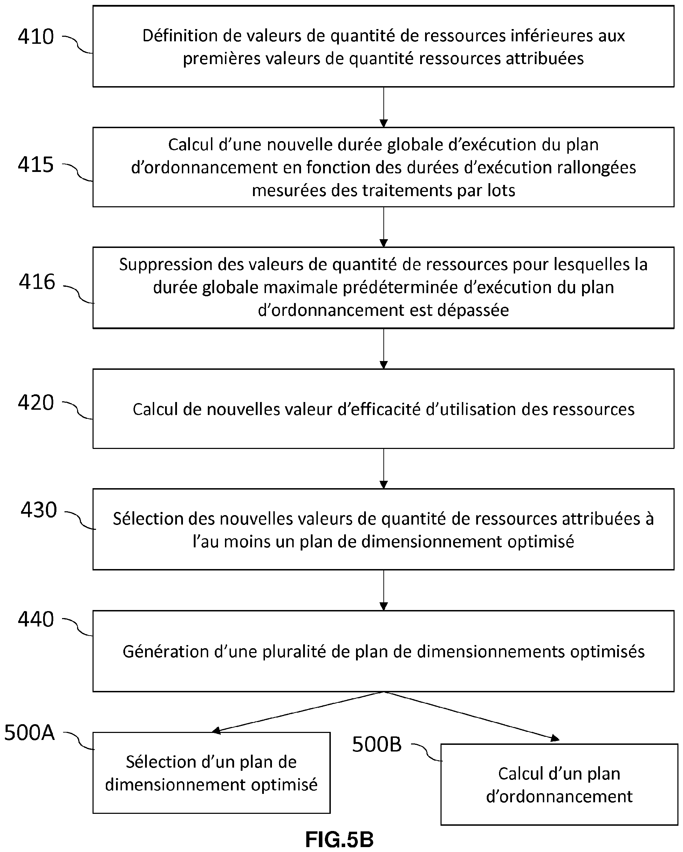

Selon un autre mode de réalisation de l'étape de génération 400, illustré à la figure 5B, cette étape peut également comporter une étape de calcul 415 pour chaque valeur de quantité générée de ressources, d'une nouvelle durée globale d'exécution du plan d'ordonnancement en fonction des durées d'exécution rallongées mesurées des traitements par lots. Ce calcul peut être réalisé pour chaque valeur de quantité de ressources générées lors de l'étape 410. Avantageusement, ce calcul peut être suivi d'une étape 416 de suppression des valeurs de quantité de ressources disponibles pour lesquelles la durée d'exécution rallongée d'un des traitements par lot est supérieure à une valeur d'exécution maximale prédéterminée dudit traitement par lots.

Afin de générer le plan de dimensionnement optimisé, une étape de sélection 430est mise en œuvre. Cette étape comporte la sélection de nouvelles valeurs de quantité de ressources attribuées pour le plan de dimensionnement optimisé, pour lesquelles la nouvelle durée globale d'exécution du plan d'ordonnancement correspondant est inférieure à une durée globale maximale prédéterminée d'exécution du plan d'ordonnancement.

En outre, comme cela est présenté à la figure 5B, le procédé selon l'invention peut comporter la génération 440 d'une pluralité de plans de dimensionnement optimisés. La génération 440 d'une pluralité de plans de dimensionnement optimisés permet à un administrateur SI de sélectionner celui dont les ressources disponibles correspondent aux ressources nécessaires et à la valeur d'efficacité d'utilisation des ressources améliorée. Ainsi, dans le cas d'une génération 440 d'une pluralité de plans de dimensionnement optimisés la sélection d'un plan de dimensionnement à appliquer peut-être laissée à un utilisateur. Néanmoins, avantageusement, le procédé selon l'invention peut comporter une étape de sélection automatisée 500A d'un plan de dimensionnement optimisé.

Alternativement ou en complément, l'étape de génération 400 du procédé d'optimisation selon l'invention peut comporter le calcul 415, pour chaque valeur de quantité de ressources disponibles, d'une durée d'exécution globale de la pluralité de traitements par lots. Ici, le calcul se fait de préférence en fonction des valeurs de quantité de ressources disponibles et des durées d'exécution rallongées mesurées des traitements par lots. Dans ce cadre, les valeurs de quantité de ressources attribuées sont des valeurs minimales de quantité de ressources permettant une valeur de durée d'exécution globale de la pluralité de traitements par lots inférieure à une valeur de durée d'exécution globale maximale prédéterminée. Ainsi, le dimensionnement présente, au-delà d'une considération d'efficacité d'utilisation des ressources, les valeurs minimales en ressources permettant de respecter des durées d'exécution prédéterminées.

Le tableau 3 ci-dessous présente un exemple de sélection des quantités de ressources attribuées tendant à minimiser la quantité de ressource utilisée. Il y a par exemple sélection de 75 % de la quantité de ressource initiale de R1 car c'est la quantité la plus faible permettant au traitement par lots T3 de ne pas dépasser la durée maximale prédéterminée d'exécution (7000 s) de ce traitement par lots (Durée max.). Il y a aussi sélection de 75 % de la quantité de ressource initiale de R2 car c'est la quantité la plus faible permettant au traitement par lots T1 de ne pas dépasser la durée maximale prédéterminée d'exécution (15000 s) de ce traitement par lots (Durée max.).

**[Tableaux 3]**

| **Traitement par lots** | **Durée max.** | **R1 - Quantité** | **R1 - Durée** | **R2 - Quantité** | **R2 - Durée** |
|---|---|---|---|---|---|
| T1 | 15000 s | 100 % | 9256 s | 100 % | 9256 s |
| | | 75 % | 9865 s | **75 %** | 12320 s |
| | | 50 % | 12327 s | | |
| T2 | 2500 s | 100 % | 1820 s | 100 % | 1820 s |
| | | 75 % | 1981 s | 75 % | 1956 s |
| | | 50 % | 2406 s | 50 % | 2142 s |
| | | | | 25 % | 2365 s |
| T3 | 7000 s | 100 % | 4120 s | 100 % | 4120 s |
| | | **75 %** | 6245 s | 75 % | 5641 s |
| | | | | 50 % | 6742 s |

Avantageusement, le procédé selon l'invention peut également comporter une étape de calcul 500B d'un plan d'ordonnancement respectant les règles d'exécution mémorisées.

Suite à l'étape de génération 400 d'au moins un plan de dimensionnement optimisé ou suite à l'éventuelle sélection 500A d'un plan de dimensionnement optimisé, le procédé selon l'invention peut comporter en outre une étape de calcul 500B par un module de conception 60 de plan d'ordonnancement, à partir des durées d'exécution rallongées associées aux valeurs de quantité de ressources attribuées, d'un plan d'ordonnancement respectant des règles d'exécution.

De façon préférée, l'étape 500B de calcul d'un plan d'ordonnancement, s'effectue
- à partir des durées d'exécution rallongées et de règles d'exécution mémorisées sur des référentiels ressources 11 et réglementaire 12,
- en déterminant le plan d'ordonnancement optimum visant à réduire le temps global d'exécution tout en maximisant l'utilisation des ressources disponibles, et
- en déterminant, à partir des durées d'exécution rallongées, le niveau de ressource théoriquement utilisées lors de l'exécution de l'ensemble du plan d'ordonnancement.

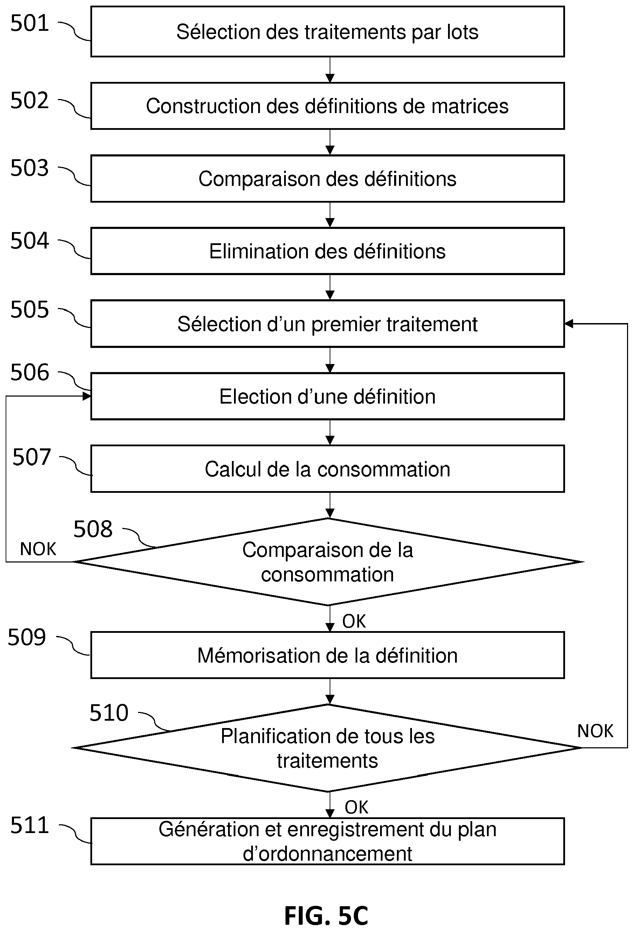

Un mode de réalisation de cette étape de calcul est notamment illustré à la figure 5C. Dans cet exemple de calcul d'un plan d'ordonnancement de traitements par lots, un module de conception 60 de plans lance, par exemple sur un dispositif numérique tel qu'une infrastructure informatique, des calculs matriciels entre des durées d'exécution rallongées de traitement par lot mémorisés sur le référentiel ressources 11 associées aux valeurs de quantité de ressources attribuées et des règles d'exécution mémorisées dans le référentiel règlementaire 12.

Lors d'une étape 501, les traitements par lot à considérer (dans le cas d'un plan d'ordonnancement partiel) sont sélectionnés. Lors d'une étape 502, l'ensemble des définitions de matrices possibles pour l'ensemble des traitements considérés sont construites notamment à partir des durées d'exécution rallongées associées aux valeurs de quantité de ressources attribuées. Celles-ci représentent les traitements par lot étalées sur l'ensemble des plages horaires.

Lors de l'étape 503 les définitions sont comparées avec le référentiel réglementaire et le module de conception de plan élimine, lors de l'étape 504, les définitions non compatibles.

Lors de l'étape 505, le module de conception 60 de plan sélectionne un premier traitement. Parmi les définitions de matrices restantes pour ce traitement, une définition est choisie de façon aléatoire lors d'une étape 506. Le module de conception de plan calcule ensuite la consommation dans le temps en ressources lors de l'étape 507.

Lors d'une étape 508, la consommation dans le temps en ressources est comparée aux données du référentiel ressources 11 afin de mesurer leur compatibilité avec l'infrastructure informatique et plus particulièrement les ressources disponibles. Si c'est le cas, c'est-à-dire que les ressources sont suffisantes pour ladite définition, la définition choisie est mémorisée lors d'une étape 509. Sinon, une autre définition est présélectionnée de façon aléatoire parmi les définitions restantes et le module de conception de plan réitère les étapes 506, 507et 508.

Une fois la définition compatible d'un traitement mémorisée, l'étape 510 permet de déterminer si tous les traitements ont été planifiés. Si non, le module de conception de plan effectue les étapes 505, 506, 507,508 et 509 tant que tous les traitements n'ont pas été planifiés.

A l'issue de l'étape 510, le module de conception de plan, dans une étape 511, génère le plan d'ordonnancement. Il peut l'enregistrer dans un catalogue de plans d'ordonnancement. Ce plan d'ordonnancement est le résultat des calculs matriciels entre les durées d'exécution rallongées associées aux valeurs de quantité de ressources attribuées et de règles d'exécution mémorisées sur des référentiels ressources 11 et réglementaire 12.

Chaque plan d'ordonnancement, peut comporter classiquement pour chaque traitement par lots le composant des informations sur la durée du traitement par lots, la consommation effectuée par le traitement sur chaque machine, l'ordre d'exécution du traitement, l'heure de démarrage du traitement, et l'heure de fin maximum du traitement.

Lors de la première mise en œuvre d'un plan d'ordonnancement, si la consommation de certaines ressources a dépassé la consommation en ressources attendue ou si certaines règles n'ont pas été respectées, alors le plan d'ordonnancement peut être supprimé et un nouveau plan d'ordonnancement peut être recalculé avec les empreintes mesurées. Cela permet de s'assurer que les règles d'exécution seront respectées et que les consommations de ressources seront au niveau de consommation attendu.

Alternativement, si la consommation de certaines ressources a dépassé la consommation en ressource attendue ou si certaines règles n'ont pas été respectées, mais que les dépassements restent faibles (par exemple inférieure à 10 % de dépassement) alors, le plan peut ne pas être supprimé. Ainsi, il y a un taux d'acceptabilité. Un traitement par lots devant durer 3h et durant 3h15 n'entrainera pas la suppression du plan d'ordonnancement si les autres paramètres sont valides.

Le calcul d'un plan d'ordonnancement optimisé est chronophage de même que l'adaptation des plans d'ordonnancement existants. Ainsi, les plans d'ordonnancement optimisant l'utilisation des ressources conçus lors de l'étape 500 peuvent faire l'objet d'un enregistrement sur une mémoire. Cela permet de générer un catalogue de plans d'ordonnancement comportant une pluralité de plans d'ordonnancement de traitements par lot.

De préférence, le catalogue de plans d'exécution contient entre 5 et 50 ordonnancements de traitements par lots, de façon plus préférée entre 10 et 40 et de façon encore plus préférée 10 et 20. En outre, ces plans d'ordonnancement sont de préférence enregistrés en association avec les valeurs d'efficacité d'utilisation des ressources et avec avantageusement des durées d'exécution rallongées et de règles d'exécution mémorisées.

Dans ce contexte, chaque plan d'ordonnancement enregistré pourra comporter une information relative à une valeur d'efficacité d'utilisation des ressources et des durées d'exécution rallongées et de règles d'exécution mémorisées.

Ainsi, le procédé comporte aussi une étape de sélection, dans ledit catalogue de plans d'ordonnancement, d'un plan d'ordonnancement adapté de traitements par lots. Cette étape peut être réalisée par le module de conception de plan d'ordonnancement.

Lors de cette étape de sélection, le procédé selon l'invention peut comparer des valeurs mesurées avec des valeurs enregistrées sur le catalogue de plans d'ordonnancement de façon à identifier un plan d'ordonnancement pouvant répondre aux besoins associés audites valeurs mesurées (quantité de ressource, durée d'exécution...)

Une fois l'ordonnancement adapté de traitements par lots sélectionné, le procédé selon l'invention peut comporter une étape de transmission du plan d'ordonnancement optimisant l'utilisation des ressources, à l'infrastructure informatique pour son exécution par un logiciel.

Les traitements par lots peuvent être mis en œuvre sur une pluralité d'infrastructure informatique.

Suite à l'étape de génération 400 d'au moins un plan de dimensionnement optimisé ou suite à l'éventuelle sélection 500A d'un plan de dimensionnement optimisé et avantageusement, de calcul 500B d'un plan d'ordonnancement respectant les règles d'exécution mémorisées, le procédé selon l'invention peut comporter en outre **une étape de vérification 600 du respect du plan d'ordonnancement** par exemple lors de sa mise en œuvre sur une infrastructure informatique correspondant au nouveau plan de dimensionnement optimisé. Comme cela sera décrit par la suite, cette étape de vérification 600 peut être mise en œuvre par un module de vérification 90. Bien que le plan de dimensionnement ait été généré à partir de données mesurées sur la pluralité de traitements par lots impliqués dans le plan d'ordonnancement, il peut exister des déviations entre les valeurs calculées et les valeurs réelles de durée d'exécution. En effet, il peut exister des effets de bords entre les ressources et ainsi, la diminution d'une ressource pourra avoir un impact sur une autre ressource impactant à son tour la durée d'exécution des traitements par lots.

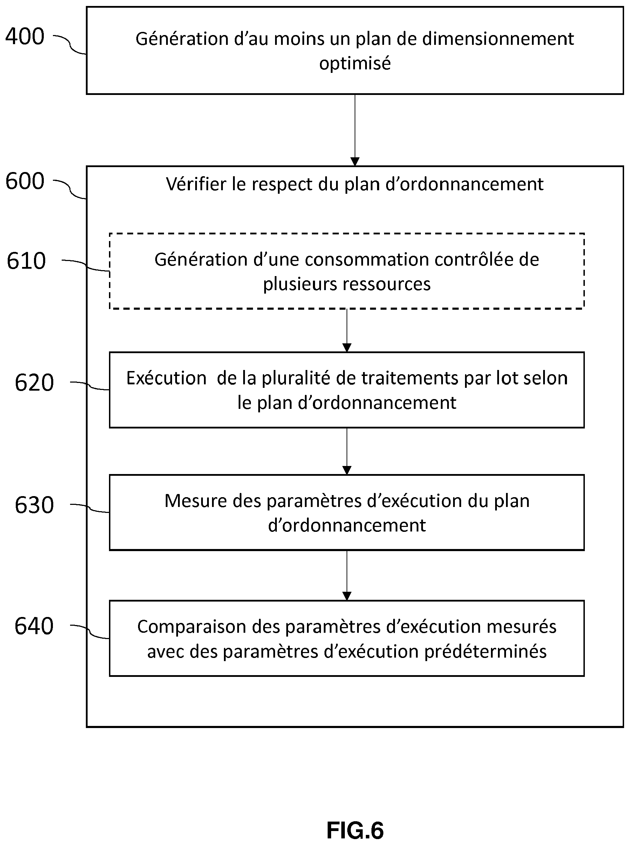

La **figure 6** illustre une telle étape 600 de vérification selon un premier mode de réalisation de l'invention. Cette étape nécessite dans un premier temps de disposer d'une infrastructure informatique correspondant au plan de dimensionnement optimisé. L'utilisateur peut mettre en place un serveur virtuel présentant des caractéristiques en accord avec le nouveau plan de dimensionnement optimisé, d'une part ou il peut alternativement disposer d'une infrastructure informatique de type serveur présentant un dimensionnement identique ou similaire au plan de dimensionnement optimisé, d'autre part. Alternativement, aux fins de vérifications, il peut utiliser une infrastructure informatique présentant un dimensionnement supérieur au nouveau plan de dimensionnement optimisé et mettre en œuvre une étape 610 de génération d'une consommation contrôlée d'une ou de plusieurs ressources de façon à faire correspondre le dimensionnement au nouveau plan de dimensionnement optimisé. Cette génération d'une consommation contrôlée peut être mise en œuvre par un module de raréfaction de ressources 20.

L'étape 600 de vérification comporte l'exécution 620 sur l'infrastructure informatique, par exemple par un module d'exécution de traitement par lots 30, du plan d'ordonnancement de la pluralité de traitements par lots. Avantageusement, l'infrastructure informatique présente des quantités de ressources correspondant au plan de dimensionnement. Lors de cette exécution, le procédé comporte la mesure 630, par exemple par un module de collecte de métriques 40, de paramètres d'exécution du plan d'ordonnancement. Les paramètres d'exécution du plan d'ordonnancement mesurés sont par exemple sélectionnés parmi : les durées d'exécution des traitements par lots et la durée globale d'exécution du plan d'ordonnancement.

Une fois l'exécution du plan d'ordonnancement finalisée, l'étape de vérification 600 comporte la comparaison 640, par exemple par un module de vérification 90, des paramètres d'exécution mesurés du plan d'ordonnancement avec des paramètres d'exécution prédéterminés du plan d'ordonnancement. Les paramètres d'exécution prédéterminés du plan d'ordonnancement peuvent par exemple être sélectionnées parmi : des règles d'exécution, des durées maximales prédéterminées d'exécution des traitements par lot ou une durée globale maximale prédéterminée d'exécution du plan d'ordonnancement.

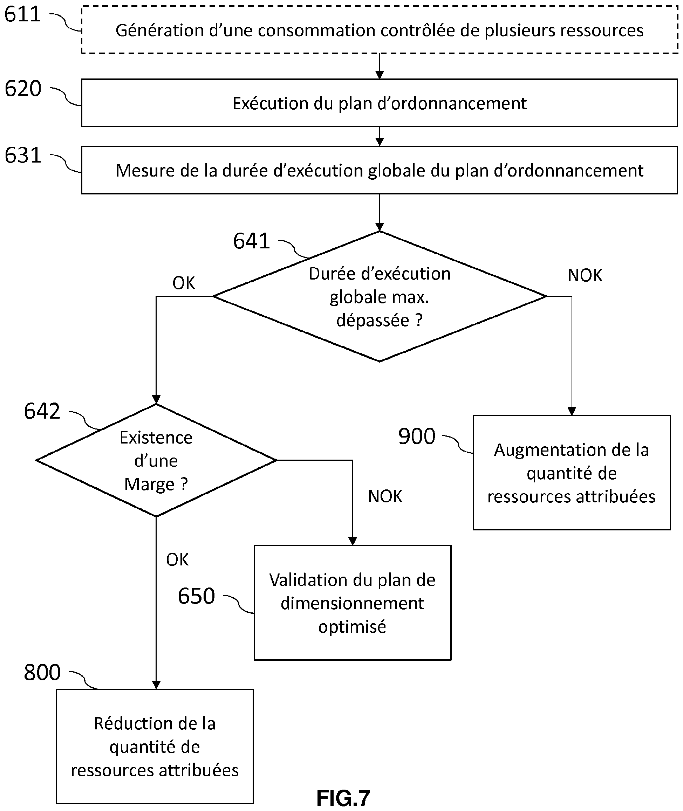

Comme cela a été décrit, lors de l'étape de vérification 600, le plan d'ordonnancement est exécuté sur une infrastructure informatique dont les ressources disponibles correspondent au nouveau plan de dimensionnement optimisé que cela soit dû ou non à la présence d'une consommation contrôlée des ressources, de préférence critiques, sur l'infrastructure informatique. Selon le mode de réalisation décrit à la **figure 7****,** l'étape de vérification 600 du respect du plan d'ordonnancement peut comporter la mise en place 611 d'une consommation contrôlée des ressources de façon à ce que la quantité de ressource disponible pour le plan d'ordonnancement corresponde au nouveau plan de dimensionnement optimisé. Alternativement, c'est une infrastructure informatique (e.g. machine virtuelle) dont la quantité de ressources correspond au plan de dimensionnement optimisé qui est utilisée. Suite à l'exécution 620 du plan d'ordonnancement et à la mesure 631 de la durée globale d'exécution du plan d'ordonnancement et/ou à la mesure des durées d'exécution de chacun des traitements par lots, il y a une comparaison 641 de la durée globale mesurée d'exécution du plan d'ordonnancement à une durée globale maximale prédéterminée d'exécution du plan d'ordonnancement et/ou à la comparaison des durées d'exécution mesurées de chacun des traitements par lots à des durées maximales prédéterminées d'exécution de ces traitements par lots.

En cas de dépassement (NOK), l'étape de vérification peut être suivie d'une étape 900 d'augmentation de la quantité de ressources attribuées qui sera détaillée par la suite. En absence de dépassement (OK), l'étape de vérification peut être suivie d'une étape 642 de calcul de la différence (i.e. de la marge) entre la durée globale d'exécution du plan d'ordonnancement et la durée globale maximale prédéterminée d'exécution du plan d'ordonnancement, puis d'une étape de comparaison de cette différence à un seuil de performance prédéterminé de façon à déterminer si le nouveau plan de dimensionnement peut être validé 650 ou si une étape de réduction 800 de la quantité de ressources attribuée doit être exécutée dans le cas où le seuil prédéterminé de performance est dépassé (NOK). La validation 650 peut par exemple comporter la génération d'un rapport comportant les valeurs de quantité de ressource du nouveau plan de dimensionnement optimisé et validé.

Par exemple, l'étape de comparaison de cette différence peut consister à déterminer si la différence n'est pas significative (NOK), c'est-à-dire qu'elle est par exemple inférieure à 10 % de la valeur de la durée globale maximale prédéterminée d'exécution du plan d'ordonnancement. Alors il peut y avoir une validation 650 du plan de dimensionnement optimisé. Lorsque la différence est significative (OK), c'est-à-dire qu'elle est supérieure à un seuil prédéterminé comme par exemple supérieure à, par exemple, 10 % de la valeur de la durée globale maximale prédéterminée d'exécution du plan d'ordonnancement, de façon préférée supérieure à 20 % et de façon plus préférée supérieure à 30 % alors l'étape de vérification peut être suivie par une étape 700 de modification du plan de dimensionnement optimisé de façon à réduire la quantité de ressources attribuée.

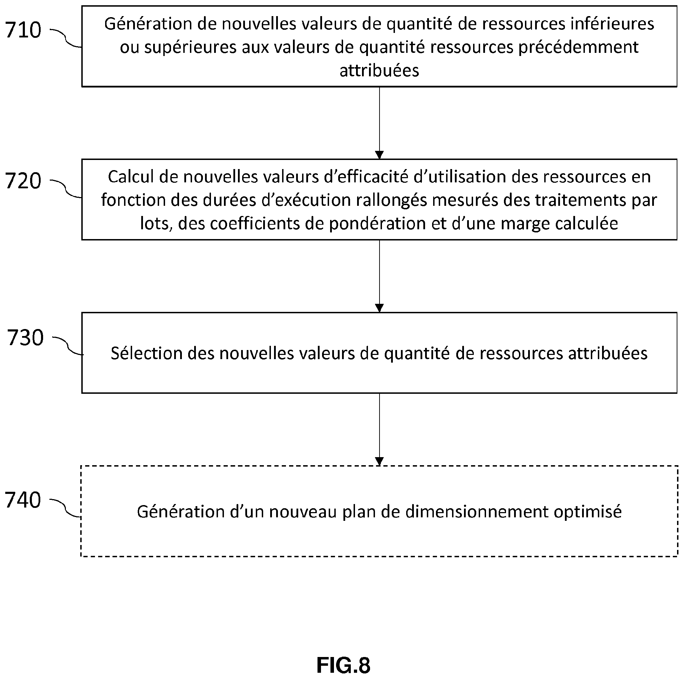

Ainsi, avantageusement, le procédé selon l'invention peut comporter une **étape de modification 700 supplémentaire de la quantité de ressources attribuée.** Une telle étape est illustrée à la **figure 8****.** Cette modification 700 supplémentaire peut avantageusement intervenir dans deux situations :
- lorsque les quantités de ressources attribuées étaient insuffisantes (e.g. la durée globale maximale d'exécution du plan d'ordonnancement a été dépassée) et donc qu'il est nécessaire d'augmenter la quantité de ressources attribuée, et
- lorsque les quantités de ressources attribuées étaient trop élevées et que cela entraine un risque de gaspillage des ressources (e.g. entre la durée globale d'exécution du plan d'ordonnancement et la durée globale maximale prédéterminée d'exécution du plan d'ordonnancement a dépassé un seuil prédéterminé de performance) et donc qu'il est nécessaire réduire la quantité de ressources attribuée.

Cette étape comporte notamment la génération 710 de nouvelles valeurs de quantité de ressources attribuées qui peuvent être inférieures ou supérieure aux valeurs de quantité de ressources précédemment attribuées. Cette génération 710 tient compte de préférence des « pas » de chacune des ressources concernées. Cette génération 710 est alors suivie d'une étape de calcul 720 de nouvelles valeurs d'efficacité d'utilisation des ressources. Cette étape de calcul 720 est fonction des durées d'exécution rallongées des traitements par lots, des coefficients de pondération et en particulier de la marge calculée lors de l'étape 642 (i.e. la différence entre la durée globale d'exécution du plan d'ordonnancement et la durée globale maximale prédéterminée d'exécution du plan d'ordonnancement). En effet, il peut exister des effets de bords lors de la réduction de la quantité de ressources pouvant être utilisée par les traitements par lots et il convient de le prendre en compte lors de la modification supplémentaire. A cause de cet effet de bord, les durées d'exécution mesurées (i.e. réelles) des traitements par lots et du plan d'ordonnancement peuvent différer des durées d'exécution calculées et donc le calcul de nouvelles valeurs d'efficacité d'utilisation des ressources doit de préférence prendre en compte cette différence (i.e. marge) de façon à fournir des résultats plus précis.

Il y a alors sélection 730 des nouvelles valeurs de quantité de ressources attribuées puis génération 740 d'un nouveau plan de dimensionnement optimisé. Ces nouvelles valeurs de quantités de ressources attribuées sont celles pour lesquelles la valeur de durée d'exécution globale du plan d'ordonnancement est inférieure à la durée globale maximale prédéterminée du plan d'ordonnancement. Enfin, cette étape 700 peut se terminer par la génération 740 d'un nouveau plan de dimensionnement optimisé.

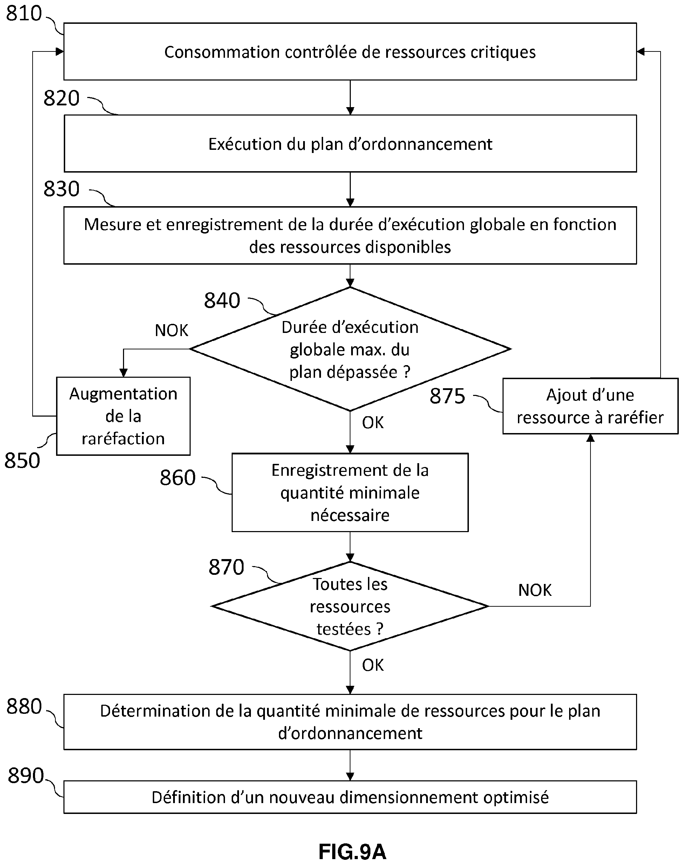

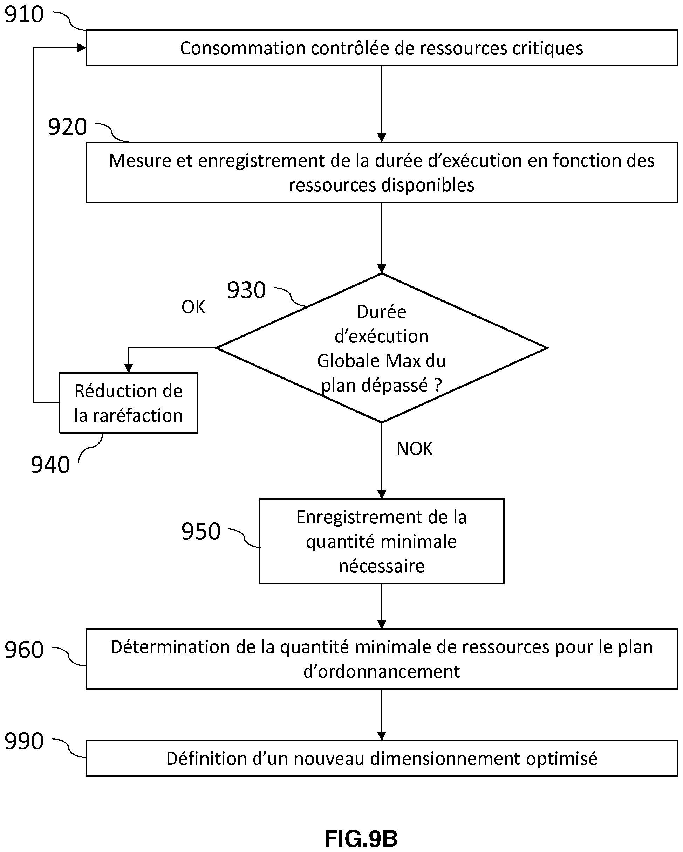

Les **figures 9** illustrent deux autres modes de réalisation dans lesquelles les quantités minimales de ressources nécessaires sont vérifiées dans le cadre de l'exécution d'un plan d'ordonnancement et permet une réduction de la quantité de ressources attribuée (Figure 9A) ou une augmentation (Figure 9B).

La **figure 9A** illustre un mode de réalisation de l'invention pour la réduction 800 supplémentaire de la quantité de ressources attribuée. Dans ce mode de réalisation, suite à l'identification d'une marge significative à l'étape 642 (i.e. la différence est significative), la réduction 800 supplémentaire est initiée par une consommation contrôlée 810 de ressources de façon à ce que les ressources disponibles pour l'exécution du plan d'ordonnancement correspondant aux ressources attribuées selon le plan de dimensionnement optimisé. Par exemple, lorsque le plan d'ordonnancement a été testé sur une infrastructure informatique dimensionnée suivant le premier plan de dimensionnement optimisé, un module de raréfaction 20 pourra mettre en œuvre une consommation contrôlée 810 des ressources de façon à réduire la quantité de ressources disponibles pour le plan d'ordonnancement.

Le procédé comporte ensuite une exécution 820 du plan d'ordonnancement puis une mesure 830 de la durée globale d'exécution du plan d'ordonnancement et éventuellement son enregistrement. Lorsque il est déterminé 840 que la durée globale maximale prédéterminée d'exécution du plan d'ordonnancement n'a pas été dépassée (NOK) alors le procédé comporte une augmentation 850 du niveau de raréfaction des ressources. Si la durée d'exécution maximum du plan d'ordonnancement a été dépassée (OK) alors le procédé comporte un enregistrement 860 de la quantité minimale de ressource nécessaire. Cette quantité minimale correspond généralement à la quantité en ressource la plus faible n'ayant pas conduit à un dépassement de la durée d'exécution maximum du plan d'ordonnancement.

Dans le cadre du procédé, comme cela a déjà été discuté, il y a avantageusement une sélection des ressources critiques et la première consommation contrôlée se fait généralement sur une seule ressource. Ainsi, après que la quantité minimale de la première ressource a été calculée, le procédé comporte une vérification 870 de l'existence d'éventuelles autres ressources à étudier et le cas échant (NOK) la sélection 875 puis la raréfaction d'une ressource supplémentaire. Avantageusement, il peut y avoir raréfaction de deux ressources en parallèle et le procédé est conduit de façon à trouver la quantité minimale de la seconde ressource.

Lorsque l'étape de comparaison 870 d'une liste de ressources déjà testées à une liste de ressources à tester indique que toutes les ressources ont été étudiées (OK), alors le procédé comporte une étape de détermination 880 de la quantité minimale de ressources pour le plan d'ordonnancement puis la génération 890 d'un plan de dimensionnement optimisé.

Ce mode de réalisation alternatif a été décrit avec l'exécution du plan d'ordonnancement dans sa globalité mais il peut également être mis en œuvre avec l'exécution de chacun des traitements par lots de façon indépendante.

La **figure 9B** illustre un mode de réalisation de l'invention pour l'augmentation 900 supplémentaire de la quantité de ressources attribuée. Dans ce mode de réalisation, suite à l'identification d'un dépassement à l'étape 641, l'augmentation 900 supplémentaire est initiée par une consommation contrôlée 910 de ressources de façon à ce que les ressources à disposition pour l'exécution du plan d'ordonnancement soient supérieures aux ressources attribuées selon le plan de dimensionnement optimisé.

Le procédé comporte ensuite une mesure 920 de la durée globale d'exécution du plan d'ordonnancement et éventuellement son enregistrement. Lorsqu'il est déterminé 930 que la durée globale maximale prédéterminée d'exécution du plan d'ordonnancement a été dépassée (OK) alors le procédé comporte une réduction 940 du niveau de raréfaction des ressources. Si la durée d'exécution maximum du plan d'ordonnancement n'a pas été dépassé (NOK) alors le procédé comporte un enregistrement 950 de la quantité minimale de ressource nécessaire. Cette quantité minimale correspond généralement à la quantité en ressource la plus faible n'ayant pas conduit à un dépassement de la durée d'exécution maximum du plan d'ordonnancement.

Le procédé comporte une étape de détermination 960 de la quantité minimale de ressources pour le plan d'ordonnancement puis la génération 990 d'un plan de dimensionnement optimisé. Ce mode de réalisation alternatif a été décrit avec l'exécution du plan d'ordonnancement dans sa globalité mais il peut également être mis en œuvre avec l'exécution de chacun des traitements par lots de façon indépendante

**Selon un autre aspect,** l'invention porte sur un **dispositif 1 d'optimisation du dimensionnement d'une infrastructure informatique 2 pour l'exécution d'un plan d'ordonnancement.** Ce dispositif est en particulier susceptible de mettre en œuvre un procédé d'optimisation du dimensionnement selon l'invention décrit précédemment.

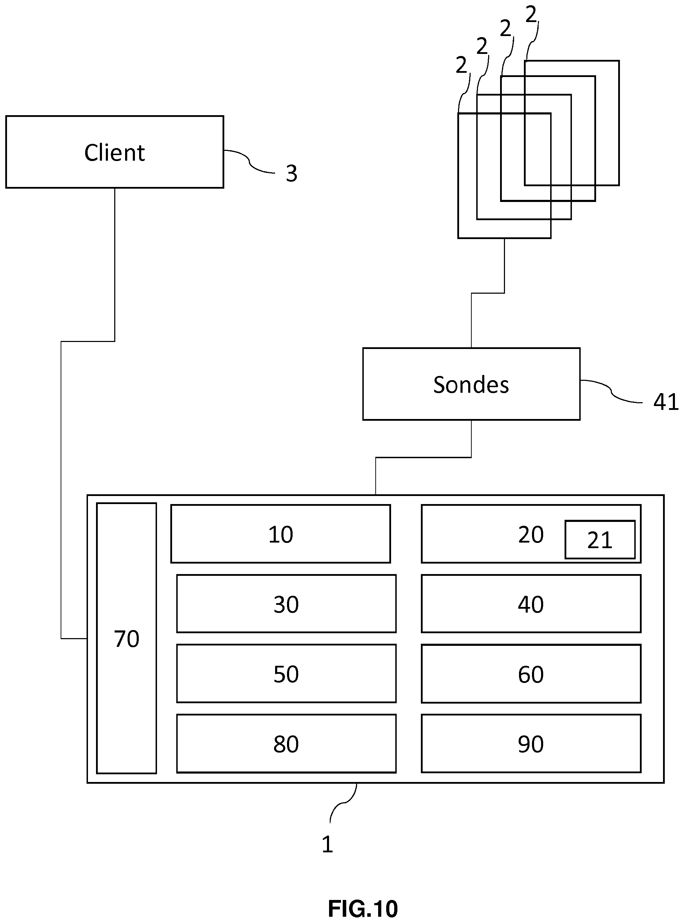

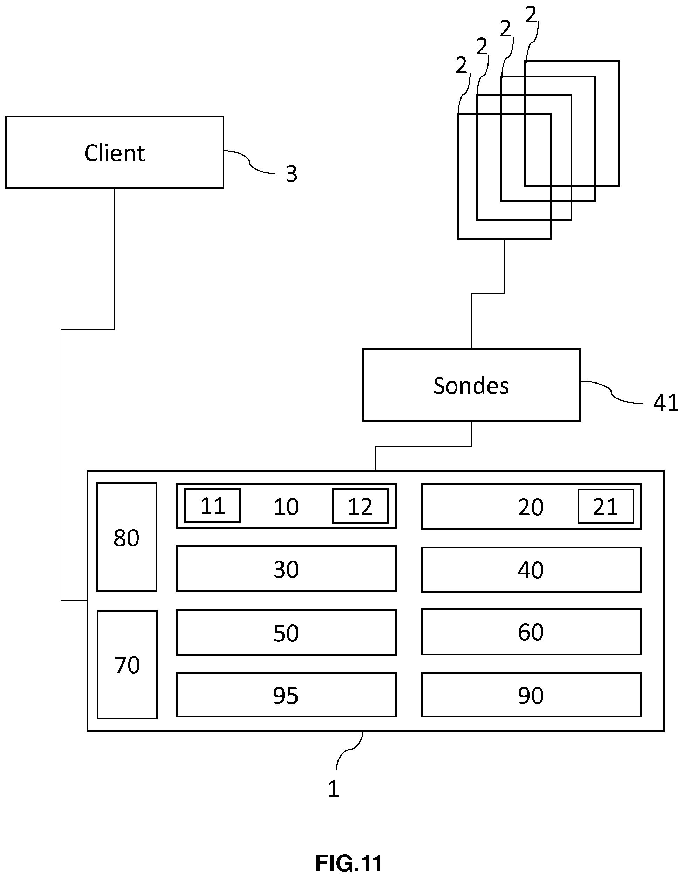

Un mode de réalisation d'un tel dispositif est illustré à la **figure 10** **et à la** **figure 11****.** Comme illustré, ce dispositif comporte notamment un module d'acquisition 10, un module de raréfaction de ressources 20, un module d'exécution de traitement par lots 30, un module de collecte de métriques 40, et un module d'optimisation 50. Il peut en outre comporter un module de conception 60, un module de vérification 90, un module de dimensionnement 70, un module de communication 80, et un module de mémorisation 95.

**Le module d'acquisition 10** selon l'invention est en particulier configuré pour acquérir un premier plan de dimensionnement. Le premier plan de dimensionnement comporte des premières valeurs de quantité de ressources attribuées permettant l'exécution d'une pluralité de traitements par lots selon un plan d'ordonnancement. En outre, il peut être configuré pour acquérir une première durée globale d'exécution du plan d'ordonnancement, des paramètres d'exécution prédéterminés d'un plan d'ordonnancement, un coefficient de pondération prédéterminé pour chaque ressource d'une pluralité de ressource, de préférence d'une pluralité de ressources critiques.

Le **module de raréfaction de ressources 20** selon l'invention est en particulier configuré pour générer une consommation contrôlée d'au moins une ressource sur une infrastructure informatique 2. Cette consommation est de préférence fonction de règles de raréfaction préalablement mémorisées de façon à laisser à disposition d'un traitement par lots une quantité de ressources disponible inférieure à une quantité de ressources initiale.

Avantageusement, le module 20 de raréfaction de ressource présente pour fonction de réduire progressivement la disponibilité d'une ressource critique. Ainsi, il est possible d'augmenter progressivement la raréfaction de la ressource critique jusqu'à provoquer un dépassement d'une durée maximale prédéterminé d'exécution pour le traitement par lot étudié. Le module 20 de raréfaction peut donc être considéré comme créant un environnement dégradé pour le ou les traitements par lots étudiés car les règles de raréfaction peuvent contrôler à quelle quantité de ressources de l'infrastructure informatique 2 les traitements par lots étudiés accèdent.

De façon préférée, le module 20 de raréfaction de ressources est configuré pour générer une consommation contrôlée d'au moins une ressource critique selon les règles de raréfaction préalablement mémorisées sur un référentiel 21 de raréfaction. Il peut y avoir une consommation d'une ressource critique ou bien une consommation simultanée de plusieurs ressources critiques. Par exemple, la raréfaction d'une ressource peut reposer sur tout ou partie des données suivantes :
- un identifiant du composant ou de la ressource à perturber : par exemple une adresse réseau ;
- une valeur de date de début de la raréfaction, il peut par exemple s'agir d'une date absolue évaluée relativement à une horloge interne du dispositif produisant la raréfaction ;
- une valeur de durée de la raréfaction (e.g. nombre de secondes) ou une valeur de date de fin de la raréfaction ;
- un niveau de consommation de ressource de départ, correspondant par exemple à la plus faible quantité de ressource à consommer ;
- un niveau final de consommation de ressource, correspondant par exemple à la plus forte quantité de ressource à consommer ;
- un pas d'augmentation de la consommation, correspondant par exemple à la différence entre une première quantité de ressource à consommer et une quantité suivante, et
- une durée prédéterminée entre chaque pas d'augmentation ; et
- un ordre des différentes raréfactions à réaliser.

Ces valeurs pourront par exemple être acquises par le module 20 de raréfaction de ressource via un appel à un ou plusieurs fichiers de configuration de raréfaction de ressources du référentiel 21 de raréfaction ou bien à des instructions transmises à partir d'une interface (e.g. graphique). Ainsi, le module 20 de raréfaction peut être configuré pour recevoir et prendre en compte des règles de raréfaction. Ces règles de raréfaction sont par exemple renseignées via une interface graphique et mémorisées sur une mémoire par exemple une mémoire vive. Certaines données de règles de raréfaction des ressources critiques sont avantageusement renseignées lors de la mise en œuvre du procédé d'optimisation du dimensionnement selon l'invention. C'est par exemple le cas de la date de début de la raréfaction et l'identifiant de la ressource critique à raréfier.

Lorsque ces données sont enregistrées, elles le sont par exemple dans un fichier de configuration de raréfaction de ressources étant, par exemple, un fichier XML, un fichier CSV, un fichier INI, ou un fichier JSON. Un fichier de configurations comporte un ou plusieurs enregistrements de configuration. Dans une variante, le fichier de configuration de raréfaction est enregistré dans une base de données.

Le référentiel 21 de raréfaction couplé au module 20 de raréfaction permet la génération de codes dont l'exécution entraine la mise en œuvre de la raréfaction (i.e. la consommation de ressources). Ces codes sont soit des codes objets, par exemple pour la raréfaction de la mémoire, soit des scripts dits « shell » ou scripts shell. Les codes peuvent également être des codes compilables, la compilation étant réalisée au moment de la mise en place de la raréfaction. Comme cela sera détaillé ci-après, le dispositif est configuré pour réaliser la raréfaction de ressource(s) en parallèle de l'exécution d'un traitement par lots à étudier (ou de plusieurs).

Le référentiel 21 de raréfaction est configuré pour mémoriser des règles de raréfaction des ressources critiques pouvant être utilisées pour une raréfaction progressive des ressources critiques. Ainsi, ce référentiel 21 de raréfaction est configuré pour mémoriser des instructions permettant la consommation et donc la raréfaction des ressources disponibles pour le ou les traitements par lots. Une telle consommation des ressources peut être réalisée selon la méthode de génération de bruit décrite dans le document EP2975526.

Les ressources critiques consommées via la mise en œuvre des règles de consommation peuvent inclure (mais ne sont pas limitées à) un type de réseau, des conditions associées au réseau, une bande passante de transmission et / ou de réception disponible, une puissance / énergie disponible, une puissance de processeur disponible (par exemple vitesse d'horloge, nombre de cœurs, cache, etc.) et une quantité disponible de la mémoire. Comme mentionné, la raréfaction est générée via une consommation des ressources dont la partie consommée (i.e. utilisée ou occupée) n'est alors plus disponible pour le traitement par lot dont la durée d'exécution est mesurée. Le référentiel 21 de raréfaction permet aussi de définir des règles de consommation pour une modification progressive de la raréfaction des ressources de différentes machines virtuelles.

**Le module d'exécution de traitement par lots 30** selon l'invention est en particulier configuré pour exécuter chacun des traitements par lots de la pluralité de traitements par lots sur l'infrastructure informatique 2. Il peut s'agir de tout agencement matériel et logiciel apte à permettre l'exécution de traitement par lots sur l'infrastructure informatique 2. Le module d'exécution de traitement par lots 30 est en particulier configuré pour exécuter les traitements par lots les uns après les autres par exemple lors du calcul des durées d'exécution rallongées ou selon un plan d'ordonnancement (e.g. avec des traitements par lots simultanés) par exemple lors de l'étape de vérification.

**Le module de collecte de métriques 40** selon l'invention est en particulier configuré pour mesurer des durées d'exécution rallongées en fonction de valeurs de quantité de ressources disponibles pour chacun des traitements par lots de façon à déterminer des durées d'exécution rallongées pour la pluralité de traitements par lots, en fonction de valeurs de quantités de ressources disponibles. De façon préférée, le module 40 de collecte de métriques est en outre configuré pour mesurer des empreintes de la consommation des ressources par les traitements par lots.

Pour cela, le module 40 de collecte de métriques peut faire appel à une sonde 41 ou à une pluralité de sondes 41. La ou les sondes 41 permettent de collecter des données sur les durées d'exécution des traitements par lots et/ou la consommation des ressources de l'infrastructure informatique 2. Le module 40 de collecte peut faire appel à un fichier de surveillance comportant des règles de collecte de métriques. Ces règles de collecte de métriques peuvent spécifier des données qui doivent être enregistrées lors de l'exécution de la brique applicative.

Ces mesures peuvent par exemple être réalisées à partir d'une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être associées à chaque paramètre (e.g. durée d'exécution, ressource ou fonctionnalités) pour remonter les informations de mesure ou métriques, représentant par exemple l'exécution du traitement par lot et le fonctionnement de l'infrastructure informatique. Pour chaque paramètre, la ou les sondes définissent un identifiant de paramètre et une valeur de paramètre. Les valeurs des paramètres peuvent être suivies en continu ou à des intervalles configurables de façon à obtenir des informations pour chaque paramètre en fonction du temps. Ces informations peuvent être stockées dans une mémoire. Dans certains modes de réalisation, le dispositif comporte une interface homme-machine permettant de définir les sondes sur chaque machine qui remontent les métriques provenant de l'utilisation des ressources de la machine.

**Le module d'optimisation 50** selon l'invention est en particulier configuré pour sélectionner de nouvelles valeurs de quantité de ressources attribuées pour l'au moins un plan de dimensionnement optimisé, pour lesquelles la nouvelle valeur d'efficacité d'utilisation des ressources est améliorée par rapport à la première valeur d'efficacité d'utilisation des ressources. Il peut s'agir de tout agencement matériel et logiciel apte à permettre la sélection de nouvelles valeurs de quantité de ressources attribuées pour le nouveau plan de dimensionnement optimisé. Ces valeurs peuvent être intégrées dans un fichier pouvant ensuite être envoyé à un client. En outre, ce module d'optimisation 50 est également configuré pour le calcul d'une première valeur d'efficacité d'utilisation des ressources à partir des premières valeurs de quantité de ressources attribuées, des coefficients de pondération prédéterminés et de la première durée globale d'exécution du plan d'ordonnancement. Le module d'optimisation 50, est également configuré pour définir des valeurs de quantité de ressources inférieures aux premières valeurs de quantité de ressources attribuées. Par ailleurs, ce module d'optimisation 50 est configuré pour calculer, pour chaque valeur de quantité de ressources, une nouvelle valeur d'efficacité d'utilisation des ressources, ledit calcul étant fonction des valeurs de quantité de ressources, des coefficients de pondération prédéterminés et des durées d'exécution rallongées mesurées des traitements par lots. Enfin, ce module d'optimisation 50 est également configuré pour sélectionner de nouvelles valeurs de quantité de ressources attribuées à l'au moins un plan de dimensionnement optimisé, lesdites nouvelles valeurs de quantité de ressources attribuées étant sélectionnées parmi les valeurs de quantité de ressources dont la nouvelle valeur d'efficacité d'utilisation des ressources est améliorée par rapport à la première valeur d'efficacité d'utilisation des ressources.

**Le module de conception 60** selon l'invention est en particulier configuré pour calculer, à partir des durées d'exécution rallongées associées aux valeurs de quantité de ressources attribuées, un plan d'ordonnancement respectant des règles d'exécution mémorisées dans un référentiel règlementaire 12. Avantageusement le module de conception est configuré pour effectuer plusieurs calculs. En effet, le module de conception est également configuré pour calculer la consommation dans le temps en ressource. En outre, le module de conception est également apte à éliminer des définitions non compatibles avec le référentiel règlementaire. Enfin, ce module est apte à sélectionner un traitement. Il peut s'agir de tout agencement matériel et logiciel apte à permettre le calcul d'un tel plan d'ordonnancement.

Par ailleurs, le référentiel règlementaire est apte à mémoriser des règles d'exécution des traitements par lots.

**Le module de dimensionnement 70** selon l'invention est en particulier configuré pour générer un plan de dimensionnement. Le plan de dimensionnement défini par le module de dimensionnement est fonction de l'empreinte de chaque traitement par lots, des règles d'exécution prédéterminées et des valeurs de quantité de ressources attribuées. Il peut s'agir de tout agencement matériel et logiciel apte à permettre la génération d'un tel plan de dimensionnement.

**Le module de communication 80** selon l'invention est en particulier configuré pour échanger des données avec des dispositifs tiers. Le dispositif 1 communique avec d'autres dispositifs informatiques grâce à ce module de communication 80. Le module de communication permet en outre, de transmettre les données sur au moins un réseau de communication et peut comprendre une communication filaire ou sans fil. De préférence, la communication est opérée par l'intermédiaire d'un protocole sans fils tel que wifi, 3G, 4G, et/ou Bluetooth. Ces échanges de données peuvent prendre la forme d'envoi et de réception de fichiers. Par exemple, le module de communication peut être configuré pour transmettre un rapport comportant pour une période une liste des valeurs de quantité de ressource du nouveau plan de dimensionnement optimisé et validé.

Le module de communication 80 est en outre configuré pour permettre la communication avec un terminal distant, dont un client 3. Le client est généralement, tout matériel et/ou logiciel. Le module de communication 80 peut également être configuré pour communiquer avec une interface homme-machine.

**Le module de vérification 90** selon l'invention est en particulier configuré pour comparer des paramètres d'exécution mesurés du plan d'ordonnancement avec des paramètres d'exécution prédéterminés du plan d'ordonnancement. Ce module de vérification 90 permet ainsi de s'assurer du respecter des durées maximales prédéterminées d'exécution des traitements par lot ou une durée globale maximale prédéterminée d'exécution du plan d'ordonnancement. Ce module permet également le respect du bon déroulement de l'exécution des traitements par lots sur une infrastructure dont les ressources correspondent au plan de dimensionnement optimisé pour la réalisation du plan d'ordonnancement (e.g. respect des règles d'exécution). En outre, afin de mettre en œuvre la comparaison des durées d'exécution, le module de vérification peut comporter tout matériel physique ou logiciel apte à permettre la réalisation ou le calcul d'un rapport de supériorité, infériorité ou égalité ou encore toutes différences entre les paramètres d'exécutions, entre une durée globale maximale prédéterminée d'exécution du plan d'ordonnancement et une durée globale mesurée d'exécution du plan d'ordonnancement. A cette fin, le module de vérification peut également être configuré pour calculer une différence ou un rapport avec un seuil prédéterminé de performance. En outre, selon certains modes de réalisation, un utilisateur peut interagir avec le module de vérification afin de paramétrer et d'indiquer au module de vérification des règles d'exécutions et des durées d'exécution maximum ou un seuil prédéterminé de performance. Cette vérification est également possible sans générer une consommation contrôlée et en prenant directement une infrastructure à la taille désirée (cela est facile lors de l'utilisation d'une VML par exemple)

En outre, le dispositif selon l'invention peut comporter un **module 95 de mémorisation** apte à, de préférence configuré pour, mémoriser une pluralité de référentiels ou de données mesurées. Par exemple, le module 95 de mémorisation est de préférence configuré pour mémoriser les coefficients de pondération de chacune des ressources considérées. Pour cela, le module 95 de mémorisation peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. Le module 95 de mémorisation peut comprendre une pluralité d'instructions ou de modules ou d'applications pour effectuer diverses fonctionnalités. Ainsi, le module 95 de mémorisation peut mettre en œuvre des routines, des programmes, ou des structures de données de type matricielle. De façon préférée, le module 95 de mémorisation peut comprendre un support lisible par un système informatique sous la forme d'une mémoire volatile, telle qu'une mémoire vive (RAM) et / ou une mémoire cache. Le module 95 de mémorisation, comme les autres modules, peut par exemple être connecté avec les autres composants du dispositif 1 via un bus et une ou plusieurs interfaces de support de données.

Le module 95 de mémorisation peut être notamment configuré pour mémoriser une des données d'identification de ressources critiques utilisées par les traitements par lots. Dans ce contexte, le module 95 de mémorisation peut par exemple être configuré pour mémoriser des données d'identification des différentes machines virtuelles ou partitions supportant le ou les traitements par lots étudiés. La ressource critique peut par exemple être une mémoire vive mais de nombreuses autres ressources peuvent être considérées telles que la lecture/écriture d'un disque, la lecture/écriture d'un réseau, ou le taux d'utilisation d'une mémoire. En outre, le référentiel de ressources peut être configuré pour mémoriser la quantité disponible de ressources critiques (e.g. CPU nombre et puissance, quantité de mémoire). Plus particulièrement, une ressource critique peut être une ressource dont la consommation moyenne est supérieure à 60 % ou bien une ressource dont la consommation présente un ou plusieurs pics de consommation supérieurs à 70 % ou encore une ressource dont une perte de 20 % ou plus de disponibilité entraine une défaillance sur l'exécution du plan d'ordonnancement étudié. Le dispositif 1 selon l'invention peut aussi être en mesure d'identifier quelles sont les ressources d'importances pour l'exécution du plan d'ordonnancement.

Le module 95 de mémorisation peut être également configuré pour mémoriser un référentiel de règles d'exécution. Le référentiel de règles d'exécution est configuré pour mémoriser des données correspondant aux règles applicables lors de l'exécution de l'ordonnancement des traitements par lots. Ainsi, un utilisateur a la possibilité d'enregistrer sur une mémoire des règles d'exécution que le plan ordonnancement doit respecter. Les règles peuvent par exemple porter sur des ordres d'enchainement à respecter (e.g. le traitement A doit s'exécuter avant le traitement B), des horaires à respecter (e.g. le traitement C doit démarrer avant 23h ou le traitement D doit être terminé avant 2h), des seuils de consommation en ressources à respecter (e.g. la consommation de la ressource 1.1.1 ne peut dépasser 80 %), des etc. De telles règles peuvent être mémorisées dans au moins un tableau matriciel mémorisé correspondant à chaque traitement Ti. Par exemple, afin d'éviter l'exécution simultanée, ou chevauchement, de deux traitements par lots, une ligne peut être ajoutée à chaque matrice de traitement, ladite ligne ne contenant plus la consommation d'une ressource pour les plages horaires mais une valeur identique (par exemple 99) dans la première colonne pour les deux ou plusieurs traitements concernés. Cela permet d'indiquer au module de vérification 90 que par exemple, le chevauchement des traitements T1 et T2 est interdit.

Les différents modules ou référentiels sont distincts sur les figures 10 et 11 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Le dispositif 1 selon l'invention peut être intégré dans un système informatique et ainsi être apte à communiquer avec un ou plusieurs dispositifs externes tels qu'un clavier, un dispositif de pointage, un affichage, ou tout dispositif permettant à un utilisateur d'interagir avec le dispositif 1. Il faut comprendre que bien que non représenté, d'autres composants matériels et / ou logiciels pourraient être utilisé en conjonction avec un dispositif 1. Ainsi, dans un mode de réalisation de la présente invention, le dispositif 1 peut être couplé à une interface homme machine (IHM). L'IHM, comme déjà abordé, peut être utilisée pour permettre la transmission de paramètres aux dispositifs ou à l'inverse mettre à disposition de l'utilisateur les valeurs des données mesurées ou calculées par le dispositif. De façon générale, l'IHM est couplée de manière communicative avec un processeur et elle comprend une interface de sortie utilisateur et une interface d'entrée utilisateur. L'interface de sortie utilisateur peut comprendre une interface d'affichage et de sortie audio et divers indicateurs tels que des indicateurs visuels, des indicateurs audibles et des indicateurs haptiques. L'interface d'entrée utilisateur peut comprendre un clavier, une souris ou un autre module de navigation curseur tel qu'un écran tactile, un pavé tactile, une interface d'entrée de stylet et un microphone pour l'entrée de signaux audibles tels qu'un discours d'utilisateur, des données et des commandes qui peuvent être reconnues par le processeur.

Dans un mode de réalisation de la présente invention, le dispositif 1 peut être couplé à une interface de communication, par exemple une interface réseau de type Ethernet, FiberChannel, InfiniBand ou n'importe quels dispositifs permettant au dispositif 1 de communiquer avec un ou plusieurs autres dispositifs informatiques.

En outre, comme cela sera apprécié par l'homme de l'art, des aspects de la présente invention peuvent être réalisés en tant que système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semiconducteur, ou toute combinaison appropriée de ce qui précède. Des exemples plus spécifiques (une liste non exhaustive) du support de stockage lisible par ordinateur comprendraient : un disque dur, une mémoire vive (RAM).

Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en œuvre l'invention.

Ainsi, la présente invention permet de générer automatiquement un plan de dimensionnement optimisé permettant l'exécution d'un plan d'ordonnancement avec amélioration de l'efficacité d'utilisation de ressources et tout en de préférence respectant une durée maximale d'exécution. Ainsi, des ressources pouvant être essentielles à d'autres applications ne sont monopolisées qu'en faible quantité si d'autres ressources plus disponibles peuvent venir compenser cette réduction. Cela, ainsi que tous ces avantages précédemment décrit contribuent donc à faciliter la gestion d'une infrastructure informatique impliquée dans l'exécution de traitement par lots pour un administrateur SI et à réduire le gaspillage de ressources informatiques.

## Revendications

1. Procédé de génération d'un plan de dimensionnement optimisé pour l'amélioration de l'efficacité d'utilisation des ressources d'une infrastructure informatique impliquée dans l'exécution d'une pluralité de traitements par lots selon un plan d'ordonnancement, ledit procédé comportant :
- une étape (100) d'acquisition de données, par un module d'acquisition (10), comportant l'acquisition d'un premier plan de dimensionnement, d'un coefficient de pondération prédéterminé pour chaque ressource d'une pluralité de ressources et de paramètres d'exécution prédéterminés d'un plan d'ordonnancement, ledit premier plan de dimensionnement comportant des premières valeurs de quantité de ressources attribuées permettant l'exécution d'une pluralité de traitements par lots selon le plan d'ordonnancement sur une durée correspondant à une première durée globale d'exécution du plan d'ordonnancement ;
- une étape de calcul (200) d'une première valeur d'efficacité d'utilisation des ressources, par un module d'optimisation (50), à partir des premières valeurs de quantité de ressources attribuées, des coefficients de pondération prédéterminés et de la première durée globale d'exécution du plan d'ordonnancement ;
- une étape de détermination (300) de durées d'exécution rallongées de la pluralité de traitements par lots, en fonction de valeurs de quantités de ressources disponibles, comportant :
o la génération (310) sur une infrastructure informatique (2), par un module de raréfaction de ressources (20), d'une consommation contrôlée d'au moins une ressource selon des règles de raréfaction préalablement mémorisées de façon à laisser à disposition d'un traitement par lots une quantité de ressources disponible inférieure à une quantité de ressources initiale,
o l'exécution (320) sur l'infrastructure informatique (2), par un module d'exécution de traitement par lots (30), de chacun des traitements par lots de la pluralité de traitements par lots, et
o une étape de mesure (330), par un module de collecte de métriques (40), de durées d'exécution rallongées en fonction de valeurs de quantité de ressources disponible pour chacun des traitements par lots ; et
- une étape de génération (400), par le module d'optimisation (50), d'au moins un plan de dimensionnement optimisé, ladite étape de génération comportant :
o la définition (410) de valeurs de quantité de ressources, inférieures aux premières valeurs de quantité de ressources attribuées,
o le calcul (420), pour chaque valeur de quantité de ressources, d'une nouvelle valeur d'efficacité d'utilisation des ressources, ledit calcul étant fonction des valeurs de quantité de ressources, des coefficients de pondération prédéterminés et des durées d'exécution rallongées mesurées des traitements par lots, et
o la sélection (430) de nouvelles valeurs de quantité de ressources attribuées à l'au moins un plan de dimensionnement optimisé, lesdites nouvelles valeurs de quantité de ressources attribuées étant sélectionnées parmi les valeurs de quantité de ressources dont la nouvelle valeur d'efficacité d'utilisation des ressources est améliorée par rapport à la première valeur d'efficacité d'utilisation des ressources.

2. Procédé de génération d'un plan de dimensionnement optimisé pour l'amélioration de l'efficacité d'utilisation des ressources selon la revendication 1, **caractérisé en ce que** l'étape de génération (400) d'au moins un plan de dimensionnement optimisé comporte en outre un calcul (425) de paramètres d'exécution du plan d'ordonnancement en fonction de valeurs d'efficacité d'utilisation des ressources et **en ce que** les nouvelles valeurs de quantité de ressources attribuées sont également sélectionnées parmi les valeurs de quantité de ressources dont les paramètres d'exécution calculés respectent des paramètres d'exécution prédéterminés du plan d'ordonnancement.

3. Procédé de génération d'un plan de dimensionnement optimisé pour l'amélioration de l'efficacité d'utilisation des ressources selon l'une des revendications 1 ou 2, **caractérisé en ce que** le premier plan de dimensionnement est obtenu selon une étape de génération de plan de dimensionnement comportant :
- une étape (110) d'acquisition de données, par un module d'acquisition (10), comportant l'acquisition de règles d'exécution prédéterminées, et d'une empreinte sur une pluralité de ressources de chaque traitement par lots ;
- une étape (120) de calcul, par un module de dimensionnement (70), comportant, en fonction de l'empreinte sur une pluralité de ressources de chaque traitement par lots et selon un plan d'ordonnancement respectant les règles d'exécution prédéterminées, le calcul de valeurs maximales de consommation de ressources par période par les traitements par lots, et
- une étape de définition (130) d'un premier plan de dimensionnement d'une infrastructure informatique (2), par le module de dimensionnement (70), en fonction des valeurs maximales de consommation de ressources par périodes calculées, ledit premier plan de dimensionnement comportant des premières valeurs de quantité de ressources attribuées.

4. Procédé de génération d'un plan de dimensionnement optimisé pour l'amélioration de l'efficacité d'utilisation des ressources selon l'une quelconque des revendications 1 à 3, **caractérisé en ce qu'**il comprend la mesure (101), par le module (40) de collecte de métriques, d'une empreinte de chacun des traitements par lots et l'identification (102), par le module (50) d'optimisation, des ressources critiques pour chacun des traitements par lots.

5. Procédé de génération d'un plan de dimensionnement optimisé pour l'amélioration de l'efficacité d'utilisation des ressources selon l'une quelconque des revendications 1 à 4, **caractérisé en ce que** l'étape de génération (400) comporte en outre :
- le calcul (415), pour chaque valeurs de quantité générées de ressources, d'une nouvelle durée globale d'exécution du plan d'ordonnancement en fonction des durées d'exécution rallongées mesurées des traitements par lots, et
- la suppression (416) des valeurs de quantité de ressources, pour lesquelles la nouvelle durée globale d'exécution du plan d'ordonnancement correspondant est supérieure à une durée globale maximale prédéterminée d'exécution du plan d'ordonnancement.

6. Procédé de génération d'un plan de dimensionnement optimisé pour l'amélioration de l'efficacité d'utilisation des ressources selon l'une quelconque des revendications 1 à 5, **caractérisé en ce que**, lors de l'étape de génération (400), le procédé comporte la génération (440) d'une pluralité de plan de dimensionnements optimisés.

7. Procédé de génération d'un plan de dimensionnement optimisé pour l'amélioration de l'efficacité d'utilisation des ressources selon la revendication 6, **caractérisé en ce qu'**il comporte en outre une étape (500A) de sélection d'un plan de dimensionnement optimisé.

8. Procédé de génération d'un plan de dimensionnement optimisé pour l'amélioration de l'efficacité d'utilisation des ressources selon l'une quelconque des revendications 1 à 7, **caractérisé en ce qu'**il comprend en outre une étape de vérification (600) du respect du plan d'ordonnancement, ladite étape comprenant :
- l'exécution (620), par le module d'exécution de traitement par lots (30) et sur une infrastructure informatique dont les ressources disponibles correspondent au plan de dimensionnement optimisé, de la pluralité de traitements par lots selon le plan d'ordonnancement,
- la mesure (630), par le module de collecte de métriques (40), de paramètres d'exécution du plan d'ordonnancement, et
- la comparaison (640), par un module de vérification (90), des paramètres mesurés d'exécution du plan d'ordonnancement avec des paramètres prédéterminés d'exécution du plan d'ordonnancement.

9. Procédé de génération d'un plan de dimensionnement optimisé pour l'amélioration de l'efficacité d'utilisation des ressources selon la revendication 8, **caractérisé en ce que** l'étape de vérification (600) du respect du plan d'ordonnancement comprend au préalable la génération (610) sur l'infrastructure informatique, par le module de raréfaction de ressources (20), d'une consommation contrôlée de plusieurs ressources selon le plan de dimensionnement optimisé.

10. Procédé de génération d'un plan de dimensionnement optimisé pour l'amélioration de l'efficacité d'utilisation des ressources selon l'une des revendications 8 ou 9, **caractérisé en ce que** l'étape de vérification (600) comprend en outre :
- le calcul, par le module de vérification (90), d'une différence entre une durée globale maximale prédéterminée d'exécution du plan d'ordonnancement et une durée globale mesurée d'exécution du plan d'ordonnancement,
- la comparaison de la différence calculée, par le module de vérification (90), à un seuil prédéterminé de performance, et
- la validation, par le module de vérification (90), du plan de dimensionnement optimisé lorsque le seuil prédéterminé de performance n'est pas dépassé.

11. Procédé de génération d'un plan de dimensionnement optimisé pour l'amélioration de l'efficacité d'utilisation des ressources selon l'une quelconque des revendications 1 à 10, **caractérisé en ce qu'**il comprend en outre une étape de modification (700) du plan de dimensionnement optimisé si au moins un des paramètres prédéterminés d'exécution du plan d'ordonnancement suivants n'est pas respecté : règle d'exécution, durée maximale prédéterminée d'exécution d'un traitement par lots et durée globale maximale prédéterminée du plan d'ordonnancement.

12. Procédé de génération d'un plan de dimensionnement optimisé pour l'amélioration de l'efficacité d'utilisation des ressources selon l'une quelconque des revendications 1 à 11, **caractérisé en ce qu'**il comprend en outre une étape de calcul (500B), par un module de conception (60) de plan d'ordonnancement, d'un plan d'ordonnancement respectant des règles d'exécution.

13. Procédé de génération d'un plan de dimensionnement optimisé pour l'amélioration de l'efficacité d'utilisation des ressources selon l'une quelconque des revendications 1 à 12, **caractérisé en ce qu'**il comporte une étape (800) de réduction supplémentaire de la quantité de ressources attribuée.

14. Procédé de génération d'un plan de dimensionnement optimisé pour l'amélioration de l'efficacité d'utilisation des ressources selon l'une quelconque des revendications 1 à 13, **caractérisé en ce qu'**il comporte en outre une étape (900) d'augmentation supplémentaire de la quantité de ressources attribuée.

15. Dispositif (1) de génération d'un plan de dimensionnement optimisé pour l'amélioration de l'efficacité d'utilisation des ressources d'une infrastructure informatique impliquée dans l'exécution d'une pluralité de traitement par lots selon un plan d'ordonnancement selon l'une des revendication 1 à 10, **caractérisé en ce qu'**il comporte :
- un module d'acquisition (10) configuré pour acquérir un premier plan de dimensionnement, un coefficient de pondération prédéterminé pour chaque ressource d'une pluralité de ressource et des paramètres d'exécution prédéterminés d'un plan d'ordonnancement, ledit premier plan de dimensionnement comportant des premières valeurs de quantité de ressources attribuées permettant l'exécution d'une pluralité de traitements par lots selon un plan d'ordonnancement, ladite exécution se déroulant sur une durée correspondant à une première durée globale d'exécution du plan d'ordonnancement ;
- un module de raréfaction de ressources (20) configuré pour générer, sur une infrastructure informatique (2), une consommation contrôlée d'au moins une ressource selon des règles de raréfaction préalablement mémorisées de façon à laisser à disposition d'un traitement par lots une quantité de ressources disponible inférieure à une quantité de ressources initiale,
- un module d'exécution de traitement par lots (30) configuré pour exécuter, sur l'infrastructure informatique (2), chacun des traitements par lots de la pluralité de traitements par lots, et
- un module de collecte de métriques (40) configuré pour mesurer des durées d'exécution rallongées en fonction de valeurs de quantité de ressources disponibles pour chacun des traitements par lots,
- un module d'optimisation (50) configuré pour calculer une première valeur d'efficacité d'utilisation des ressources à partir des premières valeurs de quantité de ressources attribuées, des coefficients de pondération prédéterminés et de la première durée globale d'exécution du plan d'ordonnancement, et configuré pour définir des valeurs de quantité de ressources, inférieures aux premières valeurs de quantité de ressources attribuées ; Calculer, pour chaque valeur de quantité de ressources, une nouvelle valeur d'efficacité d'utilisation des ressources, ledit calcul étant fonction des valeurs de quantité de ressources, des coefficients de pondération prédéterminés et des durées d'exécution rallongées mesurées des traitements par lots ; et sélectionner de nouvelles valeurs de quantité de ressources attribuées à l'au moins un plan de dimensionnement optimisé, lesdites nouvelles valeurs de quantité de ressources attribuées étant sélectionnées parmi les valeurs de quantité de ressources dont la nouvelle valeur d'efficacité d'utilisation des ressources est améliorée par rapport à la première valeur d'efficacité d'utilisation des ressources.
